**Europäisches Patentamt**

**(19) European Patent Office**

**Office européen des brevets**

(11) Publication number : **0 437 829 B1**

(12) # EUROPEAN PATENT SPECIFICATION

(45) Date of publication of patent specification :
05.10.94 Bulletin 94/40

(51) Int. Cl.⁵ : **G01N 30/86**

(21) Application number : **90125392.2**

(22) Date of filing : **23.12.90**

(54) Method for distinguishing mixtures of chemical compounds.

(30) Priority : **18.01.90 US 466790**

(43) Date of publication of application :
**24.07.91 Bulletin 91/30**

(45) Publication of the grant of the patent :
**05.10.94 Bulletin 94/40**

(84) Designated Contracting States :
**CH DE FR GB LI NL**

(56) References cited :
**JOURNAL OF CHROMATOGRAPHY, vol. 499, 1990, Amsterdam-Oxford-New York-Tokyo H-J. P. SIEVERT et al. "Automated evaluation of tryptic digest from recombinant human growth hormone using ultraviolet spectra and numeric information"**

(73) Proprietor : **Hewlett-Packard Company**
**Mail Stop 20 B-O,**
**3000 Hanover Street**
**Palo Alto, California 94304 (US)**

(72) Inventor : **Sievert, Hans-Jürgen Paul**
**104 Reboda Boulevard**
**Royersford, PA 19468 (US)**

(74) Representative : **Schoppe, Fritz, Dipl.-Ing.**
**Patentanwalt,**
**Georg-Kalb-Strasse 9**
**D-82049 Pullach (DE)**

## Description

This invention relates to a method for distinguishing a first chemical compound from a second chemical compound on the basis of chromatographic data wherein said chemical compounds absorb ultraviolet radiation, according to the prior art portion of claim 1. (see Paper No. 892, presented by H.-J.P. Sievert at the 39th Pittsburgh Conference and Exhibition, 1988).

There can be little doubt that mixtures of chemical compounds have achieved great importance in modern society. The nature and operation of such mixtures are of frequent concern in fields such as agriculture, manufacturing, scientific research, and medicine. Indeed, the human body could scarcely function in the absence of chemical mixtures. Accordingly, it is frequently an object of medicine and other arts to determine the identity and concentration of the components in chemical mixtures found, for example, in the human body or other chemical reaction systems. Analysis of this sort finds numerous applications and provides the primary basis for a wide variety of product quality control programs and medical diagnostic techniques.

Probably the most common method for analyzing a mixture of one or more chemical compounds entails isolating and then characterizing each compound. Chromatography provides one means for effecting such isolation. In virtually all chromatographic separations, a mobile phase comprising a mixture of chemical compounds passes through a stationary bulk phase. Gas and liquid chromatography provide examples of techniques in which gases and liquids, respectively, are employed as the mobile phase. A number of variations on both gas and liquid chromatography are known in the art. The choice of a given variation depends intimately upon the particular separation to be performed. For example, high-performance liquid chromatography (HPLC), a technique in which a liquid mobile phase is passed through the stationary phase under the influence of high pressure, finds particular use in the separation and analysis of difficultly separated compounds having relatively high molecular weight.

Compounds separated by HPLC or other types of chromatography are generally then passed through a detector responsive to one or more of the compounds. Flame ionization, thermal conductivity, and ultraviolet(UV)/visible devices provide examples of commonly-employed detectors. As will be appreciated by those skilled in the art, ultraviolet detectors measure the degree to which a given chemical species absorbs electromagnetic radiation having wavelength between about 200 and about 400 nanometers (nm). Those of skill in the art will also recognize that a detector's positive response to a chemical compound is commonly referred to as a peak. A detector's response to each isolated component of a chemical mixture is often recorded, such as on paper or magnetic media. A recorded sequential assemblage of peaks is known in the art as a chromatogram.

A mixture of chemical compounds will commonly produce a chromatogram somewhat characteristic of that mixture. However, the particular chromatogram produced by a given chemical mixture will be greatly dependent upon the conditions under which said chromatogram is generated. As will be appreciated by those skilled in the art, factors which may influence a chromatogram include the solvent employed as an eluent, the pressure employed in the chromatographic system, the type of stationary phase used, and the nature of chromatographic apparatus itself.

Because a chromatogram is to a certain degree characteristic of a mixture of chemical compounds, chromatograms are often compared in order to distinguish one such mixture from another. For example, retention times derived from a chromatogram provide one basis for such distinction. Retention times represent the time intervals required for the isolation and detection of the individual chemical components of a mixture subjected to chromatographic analysis and are measured from the start of the analysis. The height and area of individual peaks provide additional bases for comparison two chemical mixtures. Comparative analysis on the basis of such data will understandably be complex where analyzed mixtures comprise many individual compounds and will be further complicated by variations in the conditions under which subject chromatograms are generated. Thus, the results of such analyses often can only be considered unambiguous when combined with other independent analytical methods.

Accordingly, the analysis of chromatographic data is frequently combined with or supplanted by other techniques. One such technique involves measuring the response of isolated chemical compounds upon exposure to one or more frequencies of infrared, UV, visible, or other forms of electromagnetic radiation. It is known, for example, that ultraviolet spectral data can provide structural information regarding compounds that have been separated on an HPLC system. Unfortunately, however, the interpretation of UV spectral data is often more difficult than interpretation of, for example, infrared spectral data. This difficulty can be compounded by the fact that the analysis of spectral data had traditionally been based on visual evaluation and comparison of spectra selected during elution of a mixture. These comparison techniques for UV spectra traditionally utilized only a few points in the spectral profile to validate identification.

However, the fairly recent introduction of full-spectrum photo diode-array ultraviolet detectors has significantly altered traditional UV spectral analysis. Diode-array spectrophotometers yield on-line spectra and allow rapid collection of spectra over the ultraviolet and/or visible range in digital form. These instruments, when interfaced with HPLC systems, provide a powerful tool for the analysis of complex mixtures that are not amenable to gas chromatography or other types of separations. For example, those skilled in the art will appreciate that when the composition of a liquid chromatography mobile phase is varied for the same chemical mixture, the order in which its constituent compounds elute from a chromatographic apparatus can and often does change. The order in which peaks associated with these compounds are recorded will, in turn, correspondingly vary. In order to identify peaks of interest it is vital that the peaks be tracked as their elution is varied by the solvent. In principle, the use of a diode-array detector can provide this facility.

Diode-array ultraviolet detection, however, is not without its limitations. For example, peaks can and often do overlap and respective UV spectra are sometimes insufficiently different to provide unique identification. In addition, because diode-array detectors commonly generate large amounts of information from a single chromatographic analysis, manual and interactive data reduction methods can prove time consuming and are often incomplete and imprecise. Consequently, the development of diode-array devices has hastened the development of mathematical techniques for analyzing UV spectral data. Such mathematical methods can be used to extend the use of diode-array data by the deconvolution of peaks and by using pattern recognition techniques.

Thus, a great deal of attention in the art has been directed to the implementation of diode-array UV detectors in the analysis of chemical compounds and mixtures of chemical compounds. The goal of nearly all such techniques has been to determine the identity of an unknown compound by comparing its spectral data against vast libraries of similar data for known compounds. Identification techniques following this format are known as forward searches.

It would be of great utility, however, to also perform reverse searches of spectral data to identify a predetermined number of known components that are expected to be present in an unknown sample or to distinguish dissimilar compounds or mixtures. Reverse search spectral analysis could be employed in areas such as the quality control of manufactured chemicals where it is required that certain components be present in a given sample and the presence of additional components is undesirable, even critical.

## SUMMARY OF THE INVENTION:

It is an object of this invention to provide a method and apparatus for distinguishing two mixtures of chemical compounds.

Another object of this invention is to provide a method and apparatus for distinguishing two mixtures of chemical compounds on the basis of chromatographic data.

Yet another object of this invention is to provide a method and apparatus for distinguishing two mixtures of chemical compounds on the basis of spectral data.

Still another object of this invention is to provide a method and apparatus for distinguishing two such mixtures by isolating and comparing their respective constituent chemical compounds.

It is a further object of this invention to provide a method and apparatus for distinguishing two chemical compounds on the basis of chromatographic and UV spectral data.

Accordingly, this invention provides a method and apparatus for distinguishing a first mixture of chemical compounds from a second mixture of chemical compounds by analyzing chromatographic and spectrophotometric data associated with chemical compounds isolated from the mixtures. The method and apparatus provide spectral match factors and peak scores which correlate the chemical compounds. These match factors and peak scores are then employed in calculating sample scores indicative of the similarities between the mixtures.

In a preferred embodiment, the method comprises the steps of isolating the chemical compounds of the first and second mixtures using chromatography; exposing each isolated chemical compound one or more times to one or more selected wavelengths of ultraviolet radiation; and recording the respective absorbances of the isolated chemical compounds upon each exposure to the ultraviolet radiation. The respective absorbances of the isolated chemical compounds are then provided to processing means as a first data set. Further steps performed by the processing means include providing at least one general match factor by applying a general matching function to the first data set; providing respective average absorbances for the isolated chemical compounds at each selected wavelength by applying an averaging function to the first data set; providing automatch factors by applying an automatching function to the first data set and to the average absorbances; providing crossmatch factors by applying a crossmatching function to the first data set and to the average absorbances; and providing match discriminaters by applying a match discrimination function to the general match factors. A second data set is then provided to the processing means, said second data set comprising the respective retention times, peak areas, and peak heights for the isolated chemical compounds. Subsequent steps performed by the processing means include providing retention deviations by applying a retention deviation function to the second data set; providing peak area deviations by applying a peak area deviation function to the second data set; providing peak height deviations by applying a peak height deviation function to the second data set; providing area and height deviations by applying an area and height deviation function to the peak area deviations and the peak height discriminaters; assigning peaks by applying a hierarchical assignment procedure; providing at least one peak score for the isolated chemical compounds by applying a peak scoring function to the match deviations, retention deviations, and area and height deviations; providing at least one sample score by applying, via the processing means, a sample scoring function to the peak scores; and distinguishing the first mixture of chemical compounds from the second mixture of chemical compounds on the basis of at least one sample score.

## BRIEF DESCRIPTION OF THE DRAWINGS:

The numerous objects and advantages of the present invention may be better understood by those skilled in the art by reference to the accompanying figures of which:

Figures 1a-c provide two wavelength-shifted absorbance plots for the same chemical compound and a plot of general match factor versus wavelength. The figures illustrate wavelength shift and its correction by analysis of general match factors.

Figure 2 is an HPLC chromatogram of r-hGH separated with gradient I.

Figures 3a-c illustrate moderate spectral match between two tryptic peptides. Figure 3a shows the UV spectra for the two peptides, Figure 3b shows the distribution arising from plotting pairwise absorbance values for both peptides at identical wavelengths, and Figure 3c shows a comparison of the match factors for all spectra for the two peptides.

Figures 4a-c illustrate strong spectral match between two tryptic peptides. Figure 4a shows the UV spectra for the two peptides, Figure 4b shows the distribution arising from plotting pairwise absorbance values for both peptides at identical wavelengths, and Figure 4c shows a comparison of the match factors for all of the spectra for the two peptides.

Figures 5a and 5b illustrate background correction for peak spectra for a tryptic peptide. Figure 5a shows the comparison of uncorrected upslope, downslope and apex spectra for the peptide peak with a standard spectrum. Figure 5b presents the same spectra after background correction had been applied.

Figure 6 illustrates reproducibility of the tryptic map analyzed with gradient II. The figure shows the superimposition of four replicate elution profiles.

Figure 7 provides a table of standard deviations for retention time, peak area, peak height, and match factor for tryptic digests from r-hGH.

Figure 8 provides tables illustrating the similarity between replicate samples of (a) tryptic digests from r-hGH analyzed with gradient I and of (b) native and oxidized tryptic digests from r-hGH analyzed with gradient II.

Figure 9 is an HPLC chromatogram of the tryptic map for oxidized r-hGH analyzed with gradient II. The elution position for the unoxidized peptides is indicated by arrows.

Figure 10 is a flowchart illustrating the Make-Library subprogram.

Figure 11 is a flowchart illustrating the Compare-Libs subprogram.

Figure 12 is a flowchart illustrating the Make-Std-Library subprogram.

Figure 13 is a flowchart illustrating the Get-Sample-Score program.

## DESCRIPTION OF THE PREFERRED EMBODIMENTS:

The principles and methods of the present invention are applicable to a number of situations relating to the comparison of individual chemical compounds and mixtures from which they may be derived. Thus, it will be appreciated that the present invention may be practiced in situations where the identities of both of the compared species are unknown or, preferably, in situations where the identity of one species is well-known and that of the other is unknown. It is particularly preferred that a library of calibration data for one species be available. It is also preferred that chromatographic data relating to both compared species be available. Chromatographic data includes retention times, peak areas, and peak heights.

In accordance with the present invention, mixtures of chemical compounds are first isolated into their respective components. A preferred means of effecting such isolation is through the employment of chromatography. Any form of chromatography might conceivably be employed in the practice of this invention, although liquid chromatography is preferred. It is particularly preferred that high-performance liquid chromatography (HPLC) be employed in isolating the chemical compounds of mixtures to be analyzed in accordance with the present invention.

Once isolated, chemical compounds are exposed one or more times to one or more selected wavelengths of ultraviolet radiation and the respective absorbances of the isolated chemical compounds upon each exposure is recorded. Those skilled in the art will appreciate that the reliability of data derived from such exposure will increase with the number of times such exposure is effected and with the number of wavelengths employed.

Once recorded, such data is provided to processing means. Processing means amenable to the practice of this invention consist of a computing device such as the HP9000 Series 300 Pascal Workstation or any equivalent computing device capable of compiling and executing instructions. These instructions should be provided in a programming language such as Pascal or any equivalent thereof capable of implementing the algorithms of this invention. Processing means further include an input device such as a keyboard and an output device such as a video display or printer. Preferred processing means further include one or more devices for the storage of data, such as magnetic disks or tape. Processing means should also comprise a operating system or programming environment for the generation of source code in the appropriate programming language, along with a compiler or other means of converting such source code into executable programs.

Data may be provided to the processing means precisely as recorded or may be prepared or pretreated by various means well known to those skilled in the art. Examples of such preparation or pretreatment are wavelength calibration, smoothing, and transformation of the data, such as fast Fourier transform.

In accordance with the present invention, algorithms implemented by the processing means are provided. In certain preferred embodiments, these algorithms concern the problems encountered in identifying components in an HPLC separation based on the spectral and chromatographic data available from well characterized calibration standards. One such algorithm concerns the determination of spectral match factors. Thus, the spectral matching function may be defined as:

$$MF_s = 1000(1 - r^2) \quad (1)$$

where $MF_s$ stands for spectral match factor and r is a correlation coefficient according to:

$$r = \frac{[(\Sigma xy) - (\Sigma x)(\Sigma y)/n_f]}{[\{\Sigma x^2 - (\Sigma x)^2/n_f\} \{\Sigma y^2 - (\Sigma y)^2/n_f\}]^{1/2}} \quad (2)$$

where x and y, respectively, are absorbances taken from the compared spectra at the same wavelength, $\Sigma$ is the summation function, and $n_f$ is the number of selected wavelengths. It will be understood by those skilled in the art that other spectral matching functions, such as:

$$MF_s = 1000 \cdot r^2 \quad (3)$$

can be employed in the practice of this invention.

Spectral match factors can range from zero for a perfect match to 1000 for total absence of correlation. General match factors, automatch factors, and crossmatch factors provide examples of spectral match factors. For example, in determining general match factors ($MF_g$), r is the correlation coefficient obtained from the correlation between absorbances of individual spectra for a first and a second chemical compound.

As will be appreciated by those skilled in the art, one problem with the general match factor thus described is the lack of a meaningful limiting value for the differentiation between a positive and a negative match. Accordingly, one embodiment of the present invention provides such a limit.

After multiple copies of spectra are obtained for a first and second chemical compound, the spectral match factors for certain selected matches are compared. For example, the match factors for all matches of individual spectra for the first compound are compared with the average spectrum for that compound. In addition, the match factors for matches of all individual spectra for the second compound are compared against the corresponding average spectrum for that compound. These comparisons of individual versus average spectra are known in accordance with this invention as automatching functions and the match factors so obtained are known as automatch factors ($M_a$).

In accordance with one embodiment of the present invention, crossmatch factors are next obtained by matching: 1) all individual spectra for the first compound against the average spectrum for the second compound; and 2) all individual spectra for the second compound against the average spectrum for the first compound. The match factors obtained by comparing the individual spectra of one compound with the average spectrum for the other compound are known as crossmatch factors ($M_x$).

The well-known Student's t-test is employed in analyzing the results from automatching and crossmatching. Application of the t-test in this invention yields a difference (D) between the mean values for the automatch factors and the crossmatch factors. The t-test also provides a probability that this D-value is significant, i.e. that the two means are different. Where these means are different, the first and second compounds can reliably be said to represent different species.

In accordance with one embodiment, a match discrimination function may also be defined as follows:

$$MT_{dis} = D/T(DF,prob) \quad (4)$$

where $MT_{dis}$ is match discriminator, D is the difference for the mean match factor derived from the automatching and crossmatching functions, DF is the degrees of freedom which are calculated from the number of individual spectra for the first and second compounds, and T(DF,prob) is the t-value required for a desired degree of probability (prob, in %) that two means differing by that t-value are different given the degrees of freedom applicable. It is preferred that the degree of probability be 99%. As will be appreciated by those skilled in the art, $MT_{dis}$ depends on a number of factors, such as the number of spectral data points employed, the noise present in the individual spectra, any pretreatment applied to the spectra before matching and, of course, the degree of similarity between the two compounds compared. Of course, where $MT_{dis}$ is equal to one (1) the actual probability that the first and second compounds are different will be equal to the desired probability. Where $MT_{dis}$ is less than one (1), the actual probability will be less than the desired probability; where $MT_{dis}$ is greater than one (1), the actual probability will be greater than the desired probability.

In accordance with this invention, it is further intended that a fixed $MT_{dis}$ be derived for a given standard. Such derivation will permit testing for the significance of an individual match between a standard and an unknown spectrum without the need for a complete statistical analysis.

Where a given spectral match factor is not equal to zero, another value indicative of the quality of that match factor can be obtained by analysis of the residual resulting from the correlation between two spectra. It will be appreciated by those skilled in the art that if a "best-fit" regression line is calculated for the correlation between any two spectra X and Y such that as one attempts to predict absorbance values for spectrum Y from the correlated value of spectrum X for each wavelength recorded, then the residual at each wavelength is a positive or negative difference between the actual absorbance of spectrum Y and the value of specimen Y as predicted from the correlation with spectrum X. When studied as a function of increasing wavelength, residuals tend to fluctuate above or below zero (0).

If the two spectra differ in a systematic fashion, the residuals will tend to migrate across the regression line only slowly. If, on the other hand, the residuals are distributed around regression line in a random fashion, that same match factor might still indicate spectral match, obscured only by noise. Thus, in accordance with one embodiment of this invention, a crossover number (CN) is defined as follows:

$$CN = C/(N - 1) \quad (5)$$

where C is the number of times the residuals change sign when sorted by increasing wavelength and N is the number of spectral data points used for the match. It will be understood that the maximum value for CN is one (1) and that CN can never quite reach Zero (0). Higher values for CN will indicate a likelihood that the deviation from zero (0) for a given spectral match factor is due to random noise and not to systematic differences in the spectra compared. It will also be appreciated by those skilled in the art that the crossover numbers described can also be derived if spectra X and Y are exchanged. In this manner, one might obtain slightly different values which nonetheless exhibit the same characteristics.

Since the correlation procedure employs absorbance values at identical wavelengths, the comparison of spectra having an error in wavelength can lead to erroneous match factors. Thus, it is particularly preferred in determining spectral match factors that the wavelength assignment for the two spectra compared be accurate. One means for providing accurate wavelength assignments is by acquiring spectra for the same standard under conditions -- such as mobile phase, column, hardware calibration, and instrument --identical to those employed in obtaining the two spectra in question. Such acquisition might be achieved by use of an internal standard.

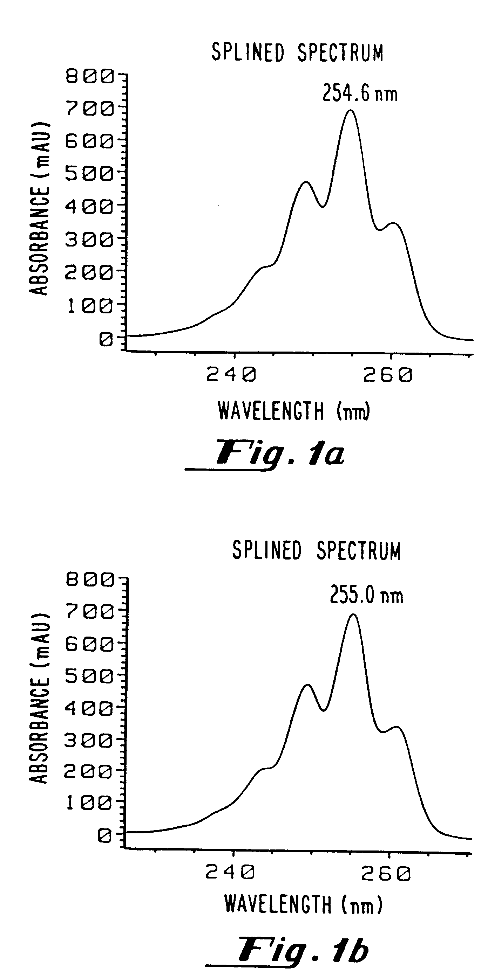

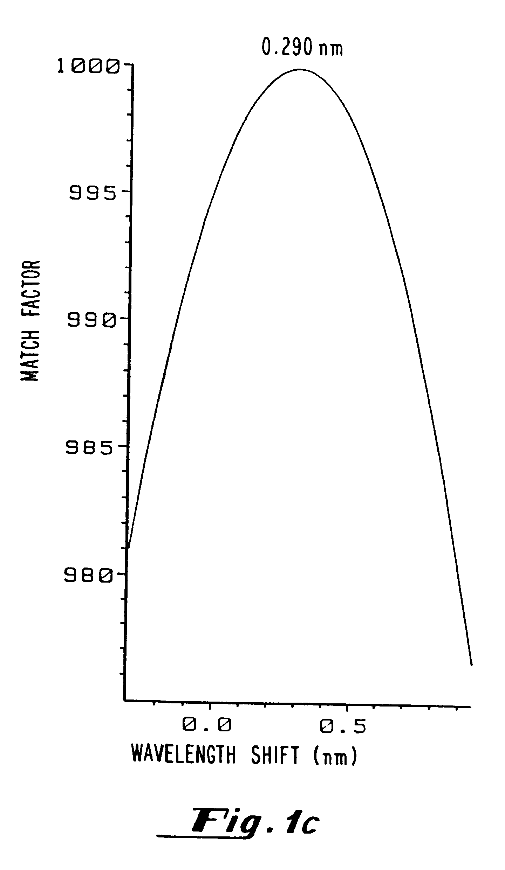

Standard spectra thus acquired can then be used to calibrate other, related spectra. As will be appreciated by those skilled in the art, the acquired standard spectra can be used to experimentally determine the difference in wavelength assignment by analyzing the spectral match factors for the two standard spectra as a function of a fractional wavelength shift to the left or right of one spectrum against the other. As shown in Figure 1, the maximum match factor should be obtained at a wavelength shift necessary to correct for any wavelength inaccuracy between the two unknown spectra. While each UV absorbance can be utilized at its nominal, absolute value, correlation can optionally be performed in accordance with one embodiment of this invention by inversely weighting each absorbance value by the variance known to be associated with the wavelength at which it was obtained. Such procedure could improve the reproducibility of the matching process of weighing less heavily those regions of the spectrum known to be unreliable.

It will be appreciated by those skilled in the art that chemical compounds can be distinguished for certain purposes by employing general match factors, automatch factors, and crossmatch factors individually or in conjunction with one another. For example, general match factor alone will sometimes be sufficiently indicative of the degree of similarity between two chemical compounds. In other cases, general match factor alone will be inconclusive and it may prove necessary to consider either automatch factor or crossmatch factor, or both, to effectively distinguish chemical compounds.

In certain embodiments, the present invention also provides a method for analyzing chromatographic data, along with UV spectral data, to determine on a peak-by-peak basis the best match for a given standard in an unknown sample. In this regard, the parameters retention time deviation ($RT_{dev}$), peak area deviation ($AR_{dev}$), peak height deviation ($HT_{dev}$), and area and height deviation ($AH_{dev}$) are defined by the following functions:

$$RT_{dev} = |RT_1 - RTu_2|/RT_{lim} \quad (6)$$

$$AR_{dev} = |AR_1 - AR_2|/AR_{lim} \quad (7)$$

$$HT_{dev} = |HT_1 - HT_2|/HT_{lim} \quad (8)$$
$$AH_{dev} = (AR_{dev} + HT_{dev})/2 \quad (9)$$

where the subscripts 1 and 2, respectively, denote expected and actual data or data corresponding to any two chemical compounds, and lim indicates an experimentally or otherwise defined limited of variability for the indicated quantities.

Thus, the provided peak assignment algorithm uses a hierarchical procedure which employs the various parameters to select peaks corresponding to chemical compounds which are to be paired and further analyzed. In accordance with certain embodiments, all unknown candidate peaks for each standard inside an optional retention time window are ranked by increasing match discriminator. If the candidate peak with the lowest match discriminator and the one with the next highest match discriminator differ by more than one (1), the one with the lowest match discriminator is considered a positive identification. If the difference is less than one (1), retention time deviation is considered next such that the peak with the lowest retention time deviation is considered a positive match if the next highest retention time deviation differs by more than one (1). If analysis of retention time deviation does not provide a statistically significant result, the area and height deviation is analyzed in a similar fashion. If, at this point, a positive identification has not been reached, CN is considered such that the candidate with the highest CN is selected as a match.

It will be understood that peak assignment between standards and unknowns has to be by directionally unambiguous; that is, each standard can only be matched by one unknown and vice versa. Thus, in cases where two different standards are matched by the same unknown peak, the priority of standards is established in accordance with this invention on the basis of the same rules used to determine the best unknown matched candidate.

After successful peak assignment, there will be a defined, unambiguous relationship between the peaks in the standard and the unknown such that at most one and possibly no peak is assigned for the unknown to each peak from the standard. Consequently, two possibilities exists for peak assignment: (1) all peaks in a standard have one peak for the unknown assigned to them and the unknown contains zero or more extra peaks that do not correspond to any standard; or (2) not all peaks in a standard have been assigned unknown peaks and the unknown contains zero or more extra peaks that do not correspond to any standard.

In accordance with certain embodiments, a peak score (PS) is next calculated for all pairs of successfully assigned peaks as follows:

$$PS = [(f_m \cdot MT_{dis}) + (f_r \cdot RT_{dev}) + (f_a \cdot AH_{dev})]/NF \quad (10)$$

where $f_m$, $f_r$, and $f_a$ are variable weighting factors for match discriminator, retention time deviation, and area and height deviation, and NF is an empirically derived normalization factor, typically three (3), equal to the number of parameters employed.

As a further indication of confidence in a given peak match, the difference in peak score between the candidate peak and the next best match can be used. It is also possible to reverse the order in which retention time deviation, area and height deviation and crossover number are used to resolve ambiguous matches, or to not include either or all values in the comparison. For example, if it is known that the response can vary from sample to sample, it might make sense not to use response matching. If, on the other hand, the same sample is analyzed using different chromatographic conditions, retention time deviation might be meaningless and area and height deviation could be used in peak tracking. It will be appreciated that such considerations will depend intimately upon each particular analysis and the facts associated therewith.

In one embodiment of the present invention, a modification of the algorithms accounts for the possibility that a chromatographic peak in the unknown might actually contain more than one component. In such embodiment, each candidate peak is checked for the presence of all the standards occurring in the pre-selected retention time window using multicomponent analysis. All but one of the standards are then subtracted from the unknown spectrum at the concentration determined and the resulting corrected spectrum is matched against the remaining standards as previously discussed.

Once peak score has been defined, a sample score (SS) can be defined as follows:

$$SS = [\Sigma PS + (p_1 \cdot EP) + (p_2 \cdot MP)]/N \quad (11)$$

where the individual peak scores are summed over all standard peaks successfully matched from the unknown, EP are extra peaks not present in the standard and are weighted by factor $p_1$, missing peaks (MP) are weighted by a penalty score $p_2$, and N is the total number of standard peaks expected. It will be appreciated by those skilled in the art that sample scores for well characterized reference materials can be analyzed to arrive at reasonable confidence limits for sample score. Scores for unknown samples can then be compared and their similarity to the standard can be indicated by the difference in sample scores.

While the principles of the present invention are described as they apply to chromatograms produced by HPLC, it is intended that the theories and methods described herein are equally applicable to chromatograms produced by other well known methods, such as gas chromatography and liquid techniques other than HPLC, such as capillary zone electrophoresis.

It is also intended that spectral data amenable to the practice of this invention may be derived from ultraviolet, visible, fluorescence, infrared, Raman, atomic absorption, nuclear magnetic resonance, and mass spectroscopic devices. It is preferred that any such spectroscopic device provide electromagnetic radiation having reproducible wavelength. It is particularly preferred that UV instruments be employed, due to both the generally high reproducibility of UV radiation and the consistent manner in which absorbance at one UV wavelength relates to absorbances at neighboring wavelengths. This is to be contrasted with discrete banded spectra encountered, for example, in nuclear magnetic resonance spectroscopy.

Additional objects, advantages, and novel features of this invention will become apparent to those skilled in the art upon examination of the following examples thereof concerning the identification of peptide fragments from a tryptic digest of recombinant-DNA-derived human growth hormone (r-hGH).

Preparation of Tryptic Digest of r-hGH

Samples of r-hGH were oxidized by adding 50 μl of chilled performic acid (nine parts 88% formic acid and one part 30% hydrogen peroxide) to 1.0 mg r-hGH and reacting the mixture for one hour at 0°C.

Samples were digested in a buffer solution containing 100 mM sodium acetate, 10 mM Tris base and 1 mM calcium chloride at pH 8.3 at 37°C by addition of 1:100 trypsin (trypsin:r-hGH, by weight) at times zero and at two hours. Samples were acidified after a total of four hours with 100 μl of phosphoric acid (pH less than 3) per milliliter of sample and analyzed directly or stored for up to three days at 2-8°C. The digestion of r-hGH was complete after four hours.

Separation by HPLC

HPLC separations were performed using a Hewlett-Packard 1090M HPLC system equipped with a DR5 ternary pumping system, an automated injection and sampling system, a heated column compartment and a diode-array detector, and controlled by an HP79994 A ChemStation.

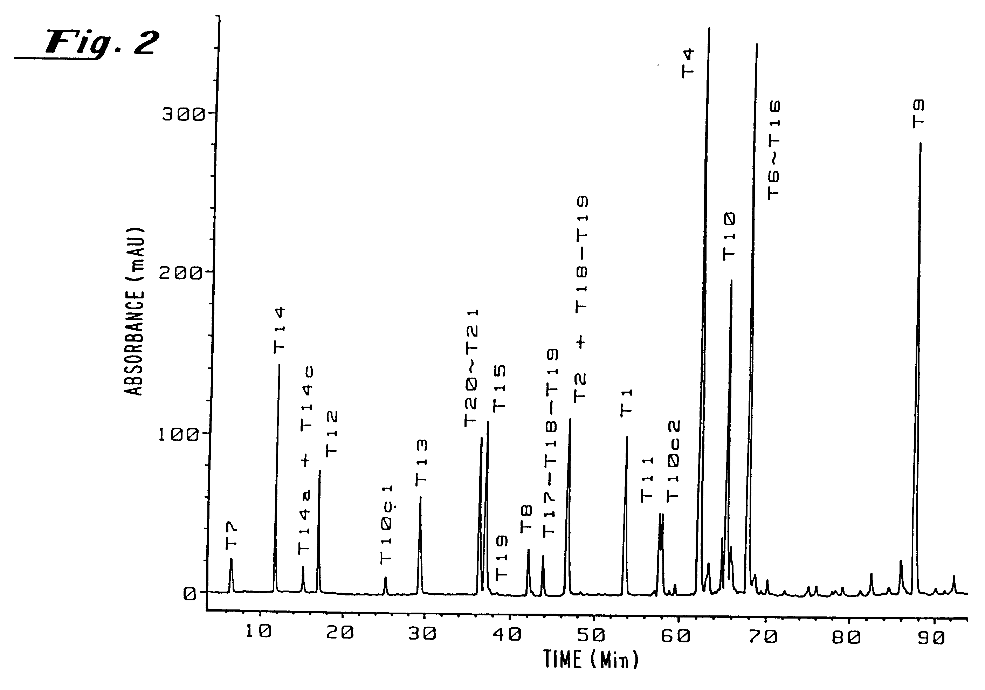

Two gradient systems were employed for the separation of the tryptic fragments. System I used trifluoroacetic acid (TFA) in water at 0.1% as solvent A, with 0.8% TFA in acetonitrile as solvent B. The gradient was linear from 0 to 60% B between 0 and 120 minutes at a flow-rate of 1 ml/min with the oven temperature set at 40°C. System II utilized 50 mM sodium phosphate in water, pH 2.85, as solvent A; solvent B was acetonitrile. The gradient profile was linear from 0 to 40% B over 120 minutes at a flow-rate of 1 ml/min with the oven temperature set to 40°C. For both gradient systems a 15 cm x 0.46 cm Nucleosil $C_{18}$ reversed phase column was used with particle size 5 μm, pore size 100 Å, packed by Alltech Associates. Figure 2 shows a typical chromatogram of a mixture of tryptic peptides derived from an r-hGH reference standard analyzed with the TFA gradient system.

Data Processing

For all analyses, spectra were acquired at one-second intervals over the range from 200 to 350 nm. In addition, chromatographic signals were recorded at 220, 230, 254, 274, 280, and 292 nm with a reference wavelength of 350 nm in all cases. Raw data were stored on magnetic media and were processed on the ChemStation using the built-in spectral library functions as well as additional evaluation software that was written for that purpose using a high-level command language available on the ChemStation.

Spectral Matching

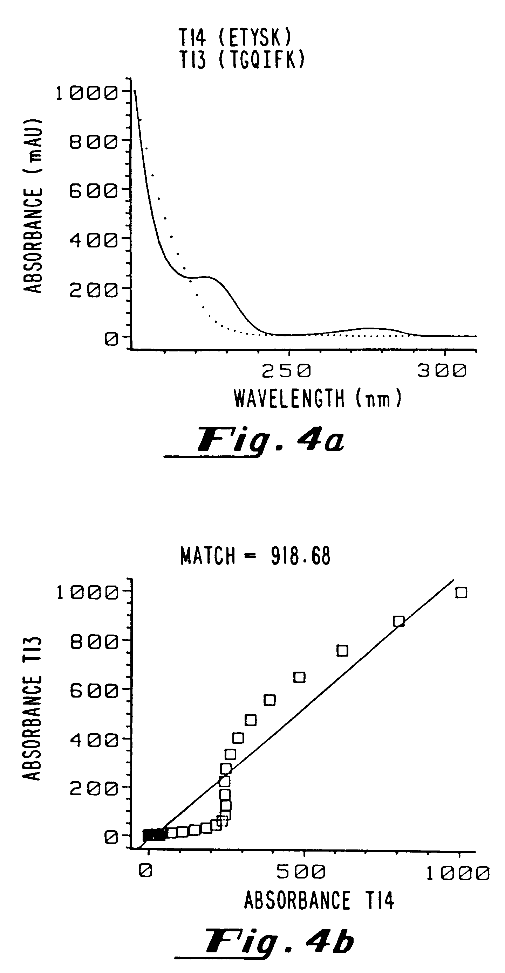

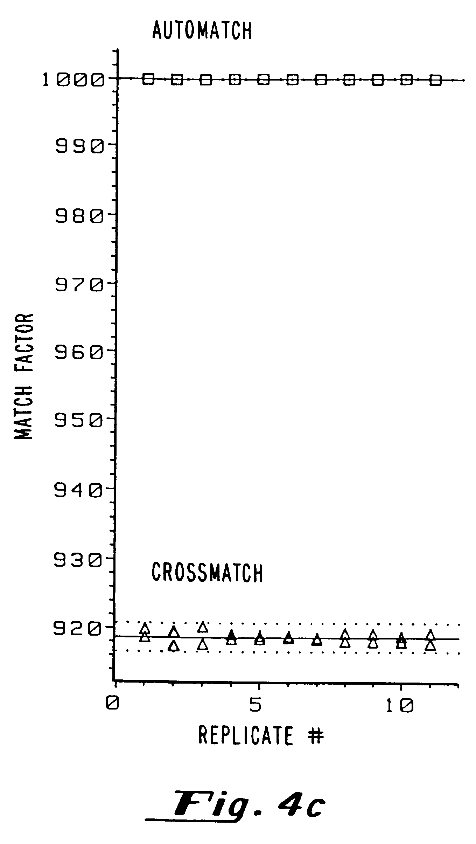

Numerical point by point comparison of the two UV spectra was implemented on ChemStation with the COMPARE command described in A. Drouen, The Compare Command, Information Note, Publication Number 12-5952-3725, Hewlett-Packard GmbH, Waldbrom, FRG (1987). This comparison is illustrated in Figure 4 where spectra for peptides T13 and T14 are compared. At each wavelength, absorbance values for the two peptide spectra are plotted as abscissa and ordinate and a linear regression is applied to the resulting scatter plot as shown Figure 4b. The square of the correlation coefficient, multiplied by 1000, is defined as the match factor for the two spectra. Those skilled in the art will appreciate that the two peptides shown in Figure 4a differ in the nature of the aromatic amino acid residue which is phenylalanine for T13 and tyrosine for T14. Their spectra are clearly different even on visual comparison and the match factor accordingly has a low value of 919.

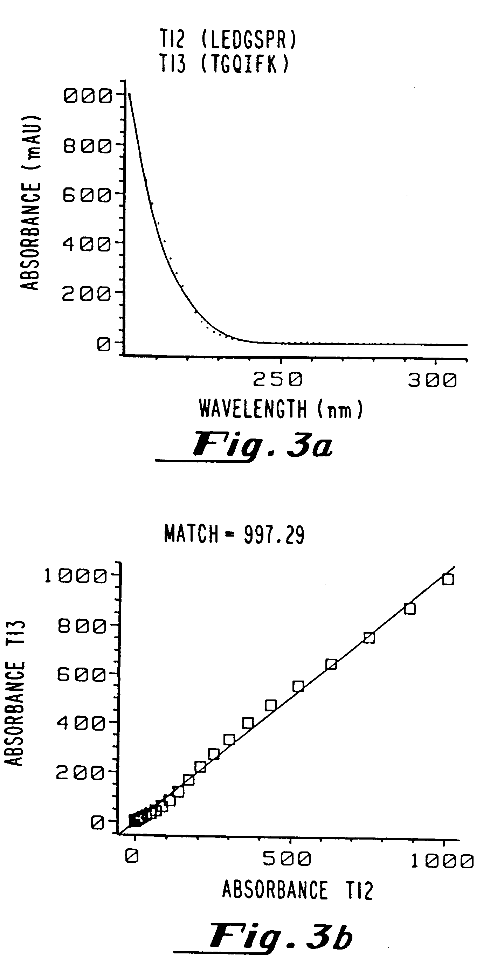

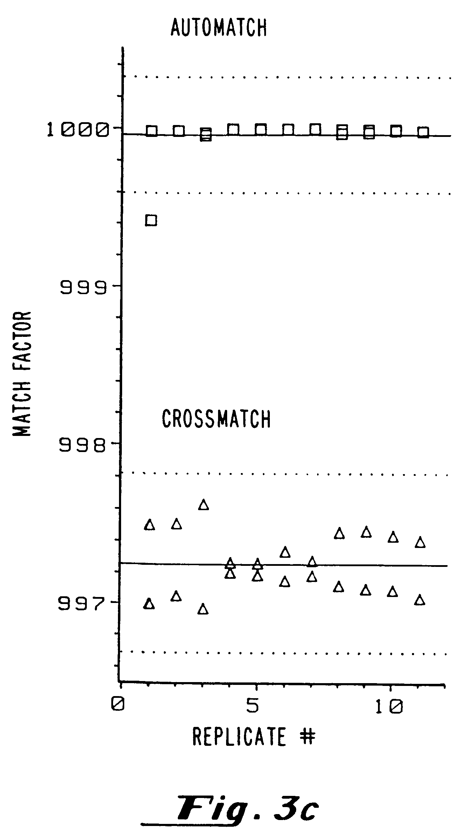

Figure 3 illustrates how the match factor is effected when T13 was compared with T12, a peptide fragment which does not contain any aromatic amino acid at all. The corresponding spectra are very similar and the match factor increases to 997 (Figure 3b), approaching the value expected for identical spectra.

Compilation of Spectral Calibration Library

A library of standard spectra for the various fragments in the tryptic map of r-hGH was next compiled. For this purpose, a reference standard was injected four times and analyzed with gradient systems I (TFA based) and II (phosphate based). Each of the resulting data files was then processed.

After integration of the signal at 220 nm, apex spectra were identified for all integrated peaks. They were corrected for solvent background by subtracting a reference spectrum which was interpolated from two base line spectra at either side of the peak. The resulting peak spectra were then stored into a library file which was referred to as a sample library since it contained all spectra characteristic of a given sample.

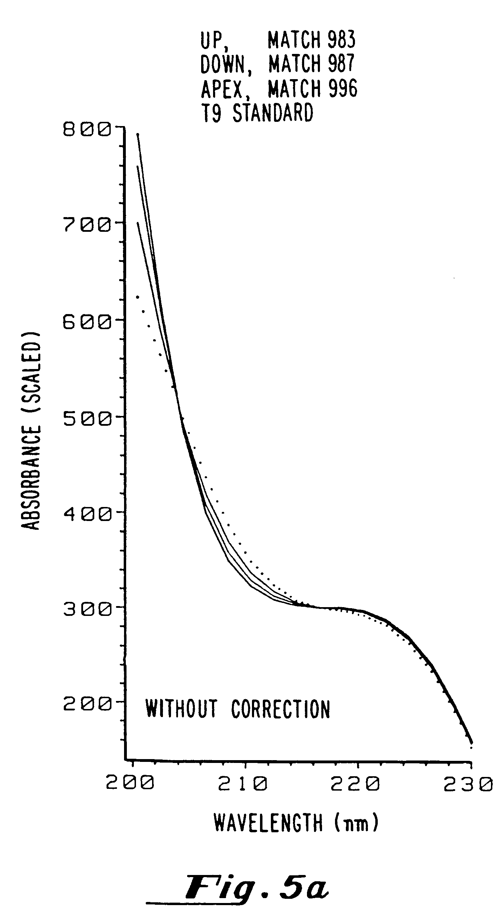

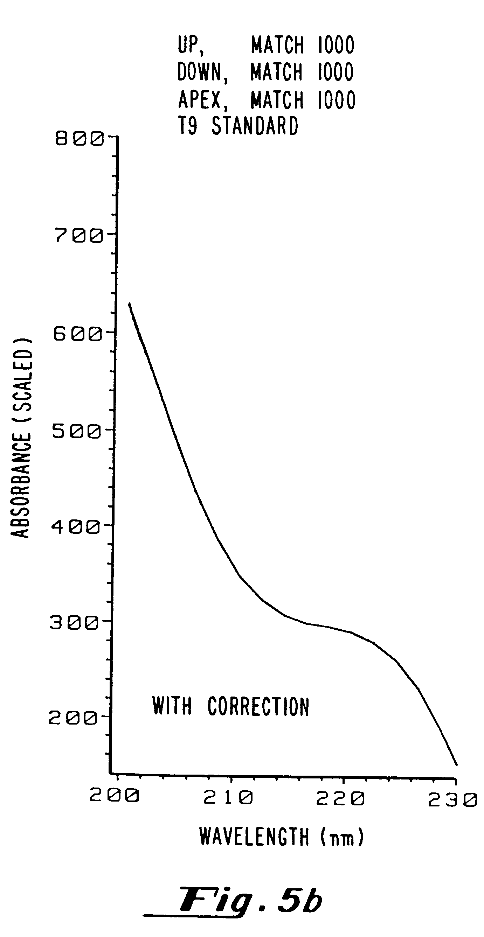

The two-point reference correction employed was especially important in the case of gradient I since TFA undergoes a significant change in spectral properties as the acetonitrile concentration is increased during the course of the gradient elution. Figure 5 illustrates how the uncorrected upslope, downslope, and apex spectra for fragment T9 differ significantly from the standard T9 spectrum. After baseline correction, all three spectra matched the standard spectrum closely, as shown in Figure 5b.

Next, a retention time window of ±0.5 minutes centered on the apex of each peak from the first standard was employed to find the spectrum with the best match from each of the other three standards. Those spectra that were common to all four standards were than averaged, normalized, smoothed, and transferred into a new spectral library file with was named the calibration library. For each peak in the tryptic map, this library file contains the UV spectrum and values for area, height, retention time, and scaling factor; all values were based on averages from the four standard runs.

As discussed in W.S. Hancock, *et al., Cold spring Harbor Symposium*, (1988) p.95, the identity of the tryptic fragments had been determined by amino acid analysis and fast atom bombardment mass spectrometry. Library entries for peaks eluting prior to the first and after the last tryptic fragment, as well as entries for peaks with area or height below 1% of total area or height, were then removed. As had been shown in the Hancock reference, most of the minor peaks were not related to r-hGH but were nonspecific background, presumably derived from trypsin or due to other interferences, such as baseline noise or solvent impurities.

The final calibration library for the TFA system contained 40 entries, 19 of which represented tryptic fragments of known identity. The phosphate library in its final from consisted of 31 entries. These two calibration libraries were used in all subsequent experiments.

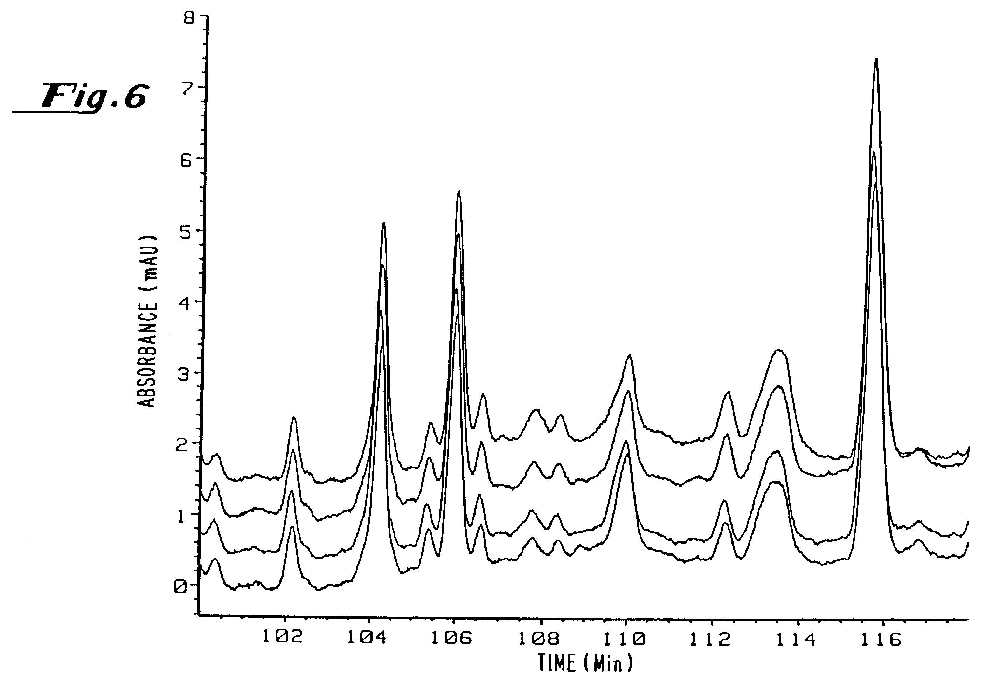

It should be noted that correlation of data from different standard runs relies heavily on good chromatographic reproducibility. In Figure 6, chromatographic traces from four replicates analyzed with gradient II are overlaid to demonstrate excellent instrument performance even towards the end of the gradient. Statistical analysis of retention time variations showed the average standard deviation for all peaks incorporated into the calibration library to be 0.027 min (1.6 s) and 0.021 min (1.3 s) for gradient system I and II respectively.

Determination of Reproducibility and Selectivity of the Calibration Library

Since two key properties of the match factor that determine the usefulness of the spectral data incorporated into the calibration library are sensitivity and selectivity, it was decided to investigate these properties in a systematic fashion in order to obtain some quantitative guidelines. Results were obtained using gradient I since TFA, when employed as modifier, presents a greater challenge for a liquid chromatograph detector and pump than does phosphate.

Reproducibility of the match factor determines the absolute limit for the similarity between any two spectra and thus defines the sensitivity of spectral matching. Two spectra can be considered different only when mean and standard deviation for the match between the two differ significantly from those obtained by repeatedly matching identical spectra. It is not sufficient to use a match factor cutoff as criteria for a positive identification. Additional statistical information is needed to determine the significance of a given match factor.

Spectra for T13 or T14 derived from eleven different injections were averaged to obtain a representative spectrum for each peptide. All individual spectra were then matched against their respective average (automatching, as shown in Figure 4c) and the resulting distribution of match factors was compared with that obtained from matching individual T13 spectra against the average T14 spectrum and vice versa (crossmatching, as shown in Figure 4c). It can be seen that the means for automatch factor and crossmatch factor are quite different; the average value for the crossmatch factor of 918.6 is certainly a good indication of dissimilarity. More importantly, confidence intervals of three standard deviations above and below each mean as indicated in Figure 4c do not overlap, but show a significant gap. Thus, T13 can be distinguished from T14 with a great degree of confidence.

Figure 3c shows the corresponding plot of automatch factors and crossmatch factors for T13 and T12. These peptides are very similar in their spectral characteristics as can be seen by the mean crossmatch factor score of 997.25. Nonetheless, there is still a clear gap between the confidence intervals for automatch factor and crossmatch factor, indicating that it is possible to differentiate between compounds of extreme similarity. In statistical terms, if Student's *t*-test is applied to the data in Figure 3c, a *t*-value of 57 is obtained along with a probability of better than 99.99% that the mean values obtained for automatch factor and crossmatch factor are indeed different.

The *t*-test for the comparison for T13 and T14 (Figure 4c) results in a *t*-value of 542 and a probability of 100.00% that the spectra are different. *t*-Values representing the similarity among the four aliphatic peptides (T7, T8, T11, and T12) ranged from 13 to 133, which is sufficient for statistically valid distinction. It will be appreciated by those skilled in the art that for a population size of 11, a *t*-value of at least 6.2 is required to provide greater than 99.99% probability that two means are different.

When the reproducibility of match factors for the four standard runs using gradient I were analyzed, it was found that the match factor ranged from 998.76 to 1000.00, with standard deviations from less than 0.001 to 1.306. This indicated that very stringent match criteria could be employed for spectral identity. Since variability of the match factor increases as peak concentrations decrease and since the relative concentrations of the tryptic fragments from r-hGH should be fairly constant, it was decided to define individual match criteria for each entry in the calibration library rather than use a fixed match threshold. To be considered a positive match, an unknown spectrum had to have a match score above a threshold of three standard deviations below the mean match for a given standard. This provided a 99.8% probability that only correct matches were assigned.

To establish selectivity of the calibration library, each standard in the calibration library was matched against every entry from a typical sample library to determine the number of potential mismatches. A mismatch in this context was defined as a standard entry for which more than one match candidate was found with a match factor inside the confidence limits previously established. According to certain embodiments, selectivity can be greatly enhanced by defining a retention time window around a given standard to limit the number of search candidates. For example, a retention time window of $\pm 1$ min was employed, incorrect matches were found for only three standards. These mismatches were all minor peaks with peak heights between 3 and 6 milli absorbance units (mAU) and did not correspond to any known tryptic fragments of r-hGH. With a $\pm 0.5$ min window, no mismatches were found. It was thus concluded that with the selection of an appropriate retention time window, the calibration library for r-hGH provides accurate identification of all fragments.

Traditional calibration procedures for a peak identification such as implemented in the standard ChemStation software and similar in nature to other commercially available software for chromatographic data handling where peak recognition is based only on retention times resulted in mismatches for 5-8 standards inside a $\pm 0.5$ min retention time window. When the window was increased to $\pm 1$ min nearly all standards exhibited mismatched peaks.

Definition and Application of the Peak Score

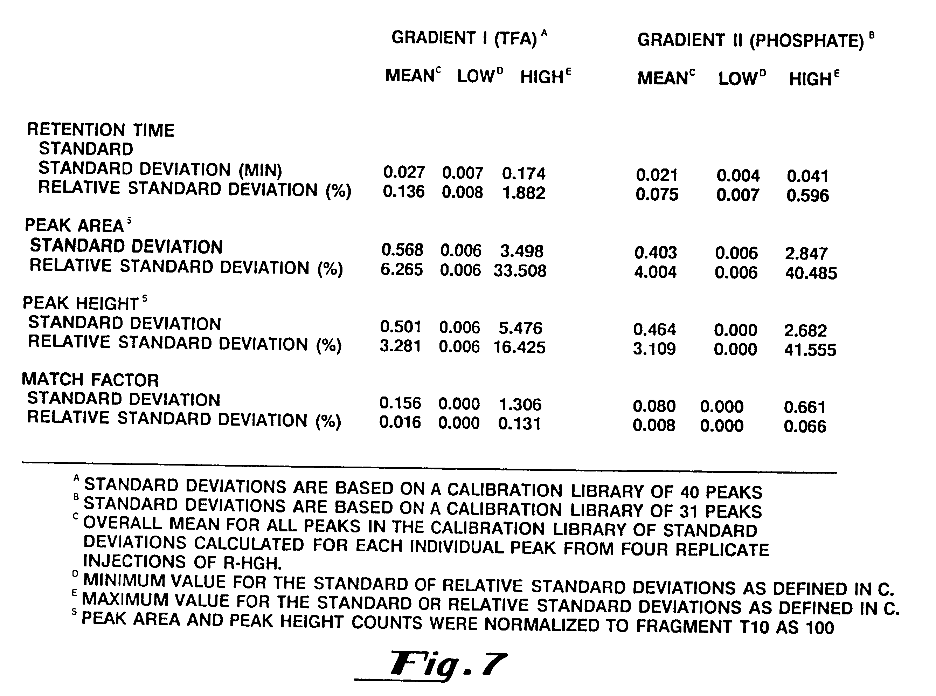

It will be appreciated by those skilled in the art that since chromatographic conditions are not always stable, resolution between adjacent peaks may change or additional peaks may appear in a tryptic map. Such instability will make positive identification of an unknown peak difficult, even when spectral matching is employed. However, in addition to peak spectra, other quantitative information is available for each peak and can be utilized in accordance with certain embodiments of the present invention to develop a procedure that will assign a numerical similarity score to each match between a standard and an unknown peak. Figure 7 shows the variability of the different parameters available to construct this score. Based on the relative standard deviations, it is obvious that the greatest confidence can be placed in the match factor. It can be seen that retention time information and peak area and height exhibit deviation larger than those for the match factor by one and two orders of magnitude, respectively.

Based on the statistical information in Figure 7, the peak score can be empirically derived as follows:

$$PS = [10 \cdot MT_{dis} + RT_{dev} + 0.1(AR_{dev} \cdot HT_{dev})]/11.2 \quad (12)$$

where, to avoid unrealistically high delta values, the following minimum values were established: 0.1 for $MT_{dis}$, 0.05 min for $RT_{dev}$, and 1% for $AR_{dev}$ and $HT_{dev}$. In this manner, equation (12) accounts for the fact that the spectral match is the most significant parameter for peak recognition and therefore is weighted most heavily. Even if all other parameters indicate a perfect match, a large deviation in the match factor indicates that the peak in questions has the wrong identity. The scaling factor of 11.2 is the sum of all weighting factors and normalizes the peak score to unit weight.

By definition, a perfect peak score would be zero, a score of one will provide a 99.8% probability that positive matches will not be missed, but usually indicates rather marginal similarity between standard and unknown. Peak scores for all entries in the four sample libraries used to construct the calibration library ranged from 0.002 to 0.465 with an average score of 0.051. Because the score is open ended, it was somewhat arbitrarily decided that a score of two or larger indicated a totally mismatched peak. It will be appreciated by those skilled in the art that the probability that a positive match will result in a score of 2 is less than 0.000002%

Automated Evaluation of Digests Using a Sample Score

Knowing how well a peak from a calibration library is matched by any given peak in an unknown sample, the next step is to develop a scoring procedure which describes the overall similarity between all of the peaks in the unknown and in a calibration sample. The sample score as previously defined allows for the accounting of missed calibration peaks as well as for supernumerary peaks found in a sample. Furthermore, the score is normalized so as to be independent of the number of entries in the calibration library. Normalization becomes a concern if the library is modified. Since peak scores larger than 2 have been defined as mismatches, all peak scores are truncated to 2 so that missed and mismatched peaks have the same peak score. The penalty score of 1 for extra peaks is strictly empirical at this point; another possible approach would be to have the penalty reflect the size of the extra peak.

While a perfect sample score is easily defined as being exactly zero, a determination must be made concerning a criterion for what constitutes the limit between a passing and a failing score. Meaningful limits will have to be established through statistical analysis of typical sample scores for reference standards to account for variability due to different lots of growth hormone and trypsin, as well as overall chromatographic variability.

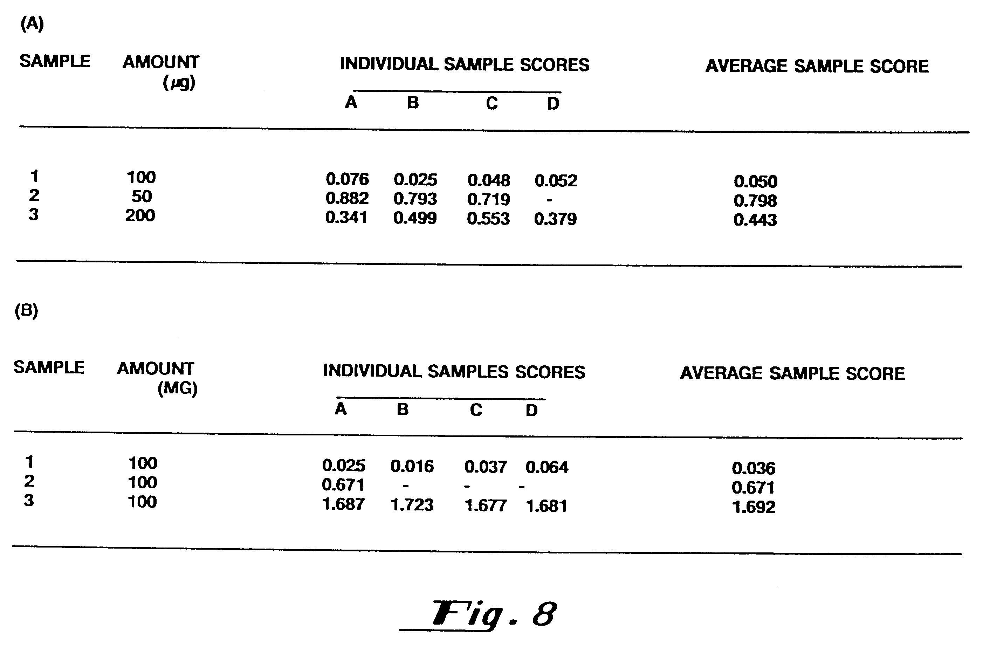

Figure 8a provides the sample scores for the four sample libraries (1A-D) used to construct the calibration library as well as for additional samples (2A-C and 3A-D) derived from the same reference standard but injected in different amounts. As expected, the calibration samples themselves (1A-D), injected at 100μg, show a very good score of 0.076 or less, with an average value of 0.050, indicative of the extreme similarity between all four replicates.

The increase in sample score for the 50μg injections (2A-C) to an average value of 0.798 is partly due to a drift in chromatographic conditions resulting in resolution changes for several peaks. The co-eluting fragments T14a and T14c were separated into two peaks, each with a spectrum different from the composite spectrum contained in the calibration library. The partially resolved peak pair T11 and T10c2 (Figure 2) was not separated at all and, consequently, neither fragment was identified. Furthermore, the fragment with the lowest concentration (T19) was not detected at this smaller sample size.

The 200μg injections (3A-D) show an average score of 0.443, and thus fall between the 100 and the 50μg samples. The increased sample score results from the same problematic peaks encountered with the 50μg injection. In both the 50 and the 200μg injection, the additional standard peaks which were missing were all small peaks of unknown identity. This indicated that the significance of these unidentified peaks with respect to sample identity needed to be investigated in some more detail.

For the phosphate gradient systems (gradient II) similar data are shown in Figure 8b. Again, the four calibration samples (1A-D) exhibit very low scores of 0.064 and less, with the average at 0.036. An additional sample (2), which also contains reference material but which was analyzed at a different time, shows a higher score of 0.671. This score is in the range of scores obtained for the 50 and 200μg injections of reference material with gradient I. Closer inspection revealed that here, too, changes in peak resolution had an adverse affect on the sample score.

In order to provide data on the kind of sample score obtained with a sample known to differ from the standard, samples of r-hGH which was oxidized prior to digestion with trypsin were analyzed to simulate potential degradation pathways. As can be seen quite clearly in Figure 8b, 3A-D, the average sample score of 1.692 lies significantly above the scores obtained for reference material and reflects the difference between oxidized and native r-hGH. Furthermore, reproducibility for the four samples is very good, indicative of the similarity among replicate injections of the oxidized samples.

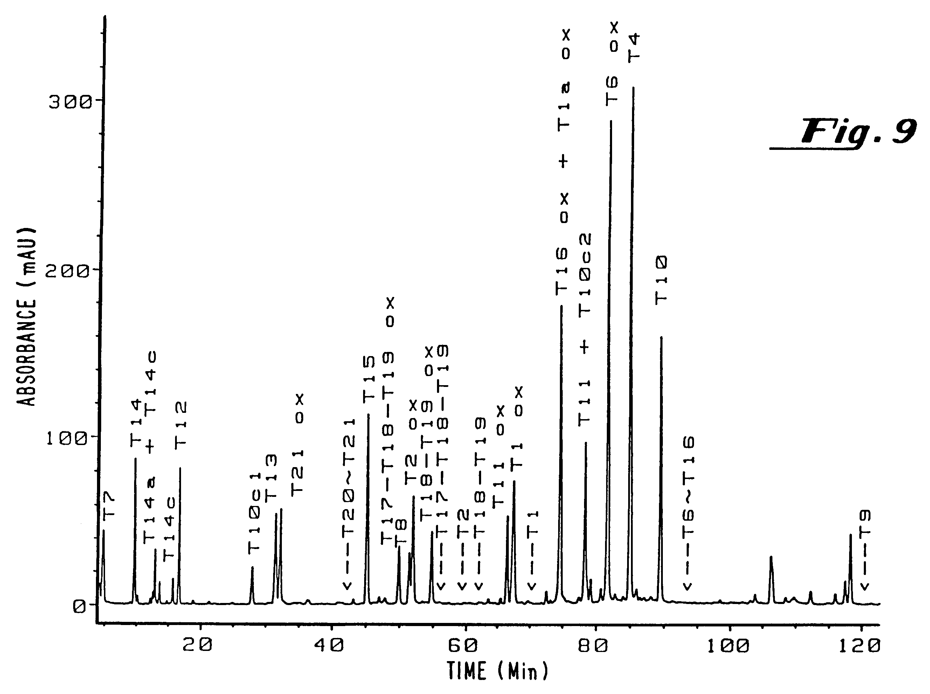

To relate this abstract score to the more traditional visual method of evaluation, Figure 9 shows a chromatogram for the oxidized r-hGH digest. Peaks that disappeared due to oxidation and those peaks that appear as new fragments and are not encountered in native r-hGH are clearly labeled.

Thus, although it is obvious that the chromatogram in Figure 9 differs considerably from the standard fragmentation pattern as indicated by the arrows, the present invention provides some clear advantages in reducing the potential for incorrect peak matching: (1) the entire evaluation procedure can be automated to obtain a final sample score without the need for operator intervention; and (2) the scoring procedure is completely digital and therefore not subject to observer bias.

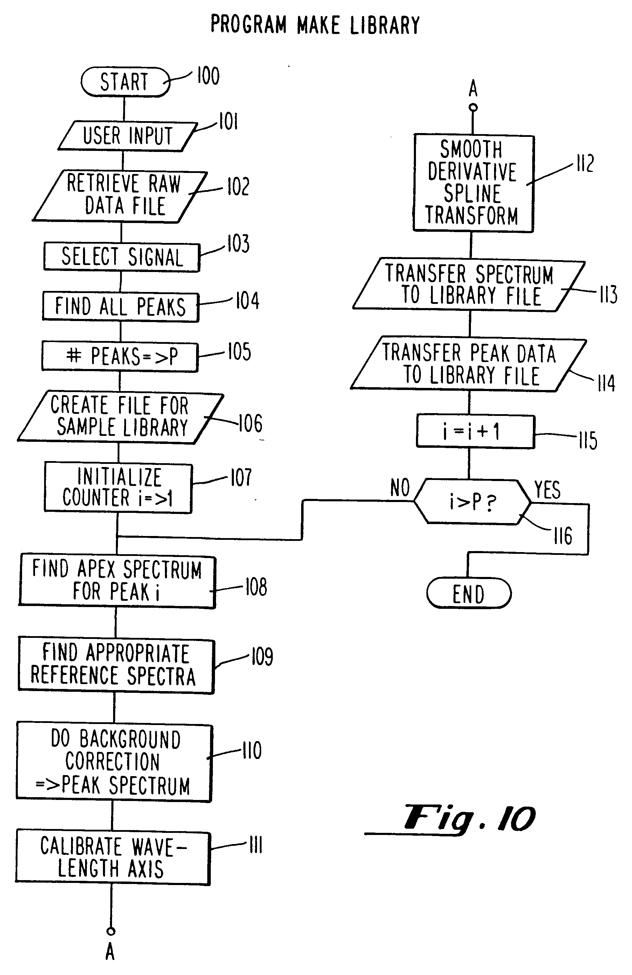

Turning to Figures 10-13, application of the method of the present invention will be described. It should be understood that where input is to be supplied to a program or subprogram said input can be provided in interactive mode by an operator or can be taken directly from a file containing the pertinent information.

The subprogram Make-Library (Figure 10) implements the reduction of raw data to the two data sets described in this invention. User input specific to this subprogram, such as the names for input and output files, wavelength selection, and integration parameters, is supplied at step 101.

The file retrieved at step 102 is a raw data file containing absorbance data as a function of both wavelength and time as would be appropriate for the information generated by a diode-array detector. Any such format could in principle be processed by the subroutine, provided that low level routines for interpretation of the file format are available. In the preferred embodiment of the invention the format of raw data is that produced by the Hewlett-Packard (HP) diode-array detector.

After raw data have been retrieved from the magnetic media, an appropriate signal characterizing the chromatographic peak response is chosen for analysis of peak data at step 103. A typical peak response would be the absorbance as a function of time at specific wavelength or wavelength range, selected such that all compounds of interest will exhibit absorbance at said wavelength or wavelength range. However, it is possible to use the average or maximum absorbance over the wavelength range recorded--or a subrange thereof--as the peak response at a given time point.

Once a signal has been determined, the subprogram finds all peaks for this signal in step 104 by employing standard integration algorithms as implemented on the HP ChemStation or any other such algorithm similar in nature to those customarily employed in chromatographic data handling. The result of the peak finding step is the determination of peak start, end, apex (retention time), area, and height, as well as of the number of peaks encountered, which is assigned to variable P in step 105.

At step 106, a library file is created which will later receive relevant peak data as generated in subsequent portions of this subprogram. This library file is typically referred to as a sample library.

Next a counter is initialized to a value of 1 at step 107 and the apex spectrum for the peak indexed by the counter is found by the subprogram at step 108. Appropriate reference spectra are then selected at step 109, typically at the beginning and end of the peak where normally only the solvent background is present. Other criteria for the selection might be employed, especially in cases where neighboring peaks are not fully separated. The number of reference spectra employed may also be varied depending on the characteristics of the chromatographic system employed.

In step 110, the reference spectra are then used to remove unwanted background absorbance from the apex spectrum in order to obtain a peak spectrum characteristic of the current peak. Although a number of different approaches can be used to construct this background correction, the preferred mode is to use linear interpolation of the reference spectra to the retention time of the apex spectrum and to subtract the interpolated spectrum from the apex spectrum. Another approach would, for example, involve principal component analysis of the solvent background followed by linear least squares subtraction.

At step 111, an optional wavelength calibration can be applied to the peak spectrum by shifting the wavelength axis left or right by a constant wavelength amount as determined previously outside the scope of the subprogram. This background correction is important primarily in cases were data for different samples might be obtained from different instruments or be derived over long periods of time on the same instrument.

At step 112 any number of possible mathematical treatments can be applied to the peak spectrum. Examples of such treatments are smoothing, the formation of higher order derivatives, splining of the wavelength axis to obtain better resolution, or any transformation of the spectrum.

The peak spectrum is transferred to the sample library at step 113 and the other peak data for the current peak as determined during the integration step (104) are transferred to the sample library at step 114. Finally, at step 115, the counter is incremented and checked against the number of peaks P in step 116. If another peak needs to be processed the subprogram returns to step 108, otherwise the subprogram execution is complete.

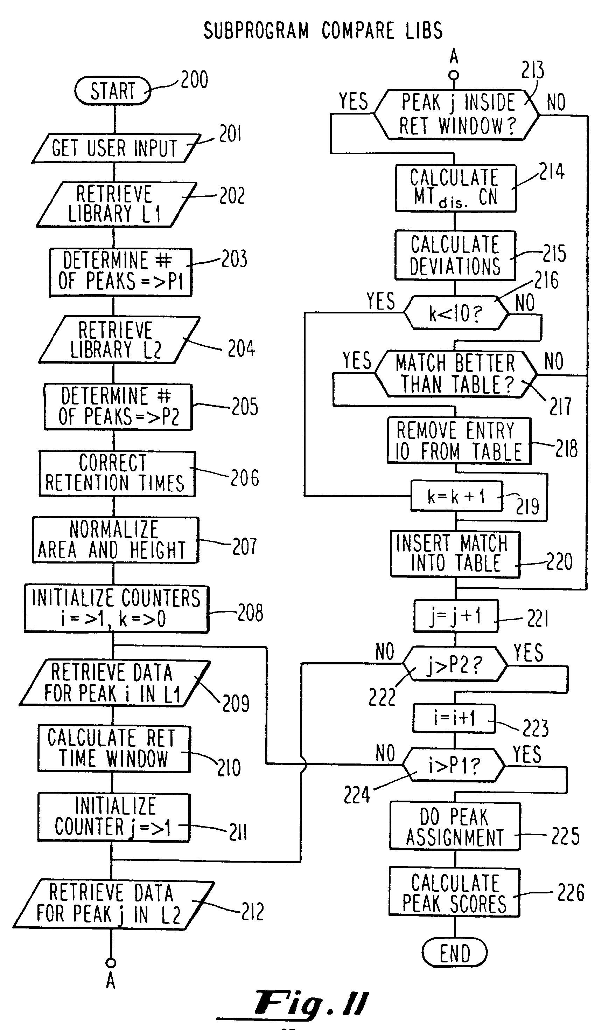

The Compare-Libs subprogram (Figure 11) provides for most of the detailed matching between any two samples presented to the subprogram in form of a sample library for each sample. In implementing this subprogram, the first sample is considered to be the reference or standard sample to be matched by the second sample. It will, however, be understood that the first sample can be of completely unknown nature, as can the second sample. It should also be understood that a 'sample library' can contain data from either a single analysis of a sample processed by the Make-Library subroutine or data derived from multiple analyses of the same sample as they would be correlated by the Make-Std-Library subprogram from sample libraries generated with the Make-Library subprogram.

In step 201, user parameters pertinent to this subprogram, are requested. User parameters include the names of the sample libraries involved as well as parameters describing the characteristics of the matching process.

In step 202 the first (reference) sample library is retrieved from magnetic media and is referred to as L1. The number of peaks stored in this library is determined and assigned to variable P1 in step 203.

Steps 204 and 205 repeat the previous two steps for the second sample library, assigning the library name to L2 and the number of peaks P2, respectively.

Step 206 consists of a retention time correction, whereby reference peaks defined in the reference sample and expected to occur at the retention times stored in the reference sample library are compared against the retention times actually encountered in the second sample. Appropriate corrections are performed to the retention times of the second sample to make them correspond to those of the first sample. Any one of a variety of possible procedures can be employed in this correction process, the simplest of which is piecewise linear fit between expected and actual retention times. Those skilled in the art will recognize that this correction may not be necessary. In step 207 peak areas and peak heights of both the first and second samples can be normalized in a number of ways. Two possible methods are normalization to the total area and height of all peaks in either sample such that all peaks are scaled to obtain an arbitrarily selected constant value for these parameters or to the area and height of selected reference peaks where normalization implies that all peaks are scaled to obtain arbitrarily selected constant values for these reference peaks. Depending on the nature of the chromatographic separation applied to the two samples, this step may not prove necessary.

Next, two counters are initialized in step 208, one for the peak currently to be matched is set to 1 (i), the other one (k) will count the number of matches found for the current peak up to a maximum of 10 which will be stored in a table of match values.

In step 209, relevant peak data for the peak currently indexed by i are retrieved from L1 and a retention time window centered upon the retention time of the current peak is constructed in step 210. This retention time window depends on knowledge of the chromatographic system employed in the separation of the first and second samples and can be extended to the total time spanned by the analysis of the first sample.

A second peak counter (j) for peaks in the second sample is initialized to 1 in step 211 and data for the peak indexed by j are retrieved from L2 at step 212. A branch point is provided at step 213 which tests whether peak j is inside the retention time window defined in step 210. If it is not, control passes to step 221. Otherwise, the subprogram continues on to step 214, where $MT_{dis}$ and CN are calculated for the data from peaks i in L1 and j in L2.

Those skilled in the art will recognize that the calculation of $MT_{dis}$ and CN can be done in a number of different ways as described elsewhere in this invention depending on the amount of information available for each peak such as multiple or average or individual spectra for the first or the second or both samples.

In step 215 any or all of the deviations defined in equations (4)-(8) are calculated from the relevant data for peak i in L1 and peak j in L2.

Next, in step 216, the number (k) of matches found so far is compared against the maximum number of matches allowed, which is arbitrarily set a constant value of 10, but could be modified to any other meaningful value. If less than 10 matches have been found the match counter is incremented in step 219. Otherwise, the match for the current peak is considered better than any of those currently stored. The match with the lowest score is deleted in step 218 and execution proceeds to step 220. Otherwise, control is transferred to step 221.

At step 220 the two branches of step 216 and the yes branch of step 217 converge again and the match information for the current peak is inserted into the match table at the appropriate position.

At step 221 the counter j for the current peak in L2 is incremented and tested in step 222 against P2, the total number of peaks in L2. If j exceeds P2, the subprogram continues with step 223; otherwise, the next peak from L2 is processed by returning to step 212.

In step 223 the counter i for peaks in L1 is incremented and tested against P1, the total number of peaks in L1 in step 224. If i exceeds L1, the subprogram continues with step 225; otherwise the next peak from L1 is processed by returning to step 209.

In step 225 peak assignment takes place between all peaks in L1 and all matches in the match table such that all conflicts are resolved by the hierarchical assignment procedure described in this invention. No more than one peak from L2 is assigned to each peak of L1 and no peak from L2 is assigned to more than one peak from L1.

Once peak assignment is complete, the peak score PS as defined in equation (10) is calculated in step 226 for each pair of matched peaks found in step 225 and the subprogram is terminated.

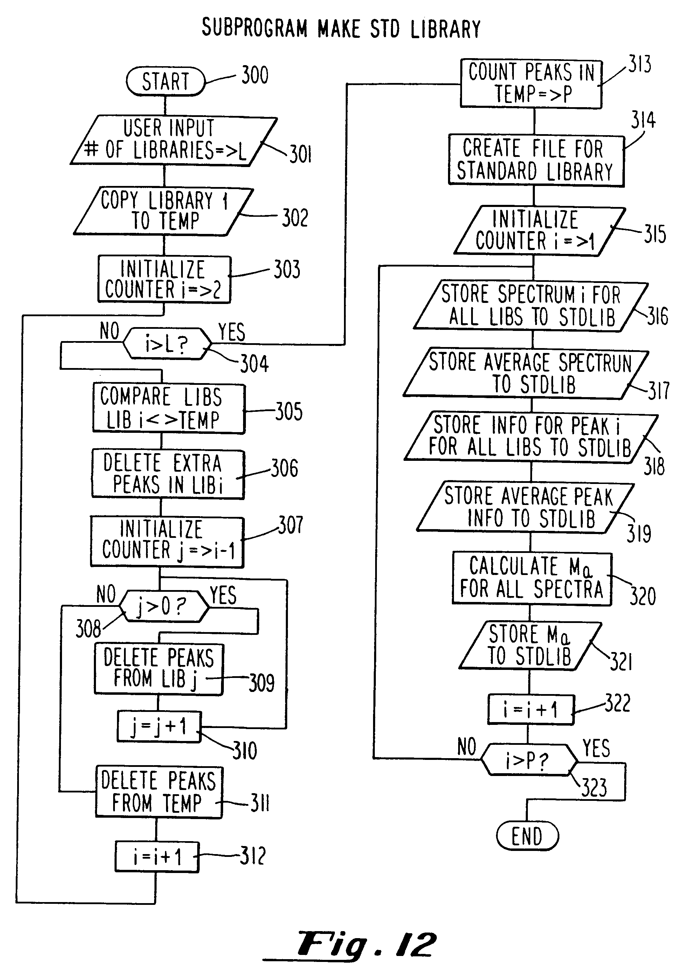

The Make-Std-Library subprogram (Figure 12) is used to correlate data from one or several sample libraries to arrive at a standard library which contains statistical information derived from data sets 1 and 2 for all peaks, as well as from the original data from the individual libraries.

At step 301 user input is requested and assigned to variable L. User input may include information such as file names and the number of sample libraries to be processed.

Next, in step 302, a temporary scratch library TEMP is created which will be used in the correlation. This library initially contains peak data on all peaks in the first sample library.

At step 303, a counter is initialized to 2 and tested in step 304 against the total number L of sample libraries. If the counter exceeds L the correlation process is complete and statistical processing commences at step 313. Otherwise, the subprogram proceeds to step 305.

At step 305 the current library indexed by j is compared to TEMP using the subroutine Compare-Libs described above. The invocation of Compare-Libs will result in an assignment between peaks in TEMP as reference library and peaks in the current sample library. Peak assignment between a given pair of peaks is considered positive if the peak score as returned by Compare-Libs is above a user-selected threshold. Any peaks in the current library not assigned to a peak from TEMP are then removed, together with all relevant peak data in step 306.

Step 307 initializes a second counter j to a value one lower than the current value of i. Steps 308 to 311 will delete all peaks in TEMP that were not matched by any peak in the current sample library or the corresponding peaks in all sample libraries already processed. Therefore, after step 311 all sample libraries, up to the current one, and library TEMP contain the same number of peaks which are all correlated on a one by one basis.

If j tests larger than 0 in step 308, the subprogram proceeds to step 309 where all peaks corresponding to unmatched peaks in TEMP will be deleted in the sample library index by j. In step 310 j is then decremented and execution returns to step 308 until j tests equal to zero (0), in which case the subprogram continues with step 311. At that point the subprogram deletes the unmatched peaks from TEMP itself in step 311, increments counter i in step 312, and returns to step 304.

Beginning at step 313, statistical processing of all sample libraries correlated takes place. Program control is transferred to this step from step 304 if the test there indicates that all libraries have been processed (i.e., counter i exceeds the value of L).

In step 313 the number of peaks remaining in TEMP -- and thus in all sample libraries -- is determined and assigned to variable P. A new library file is created in step 314 to receive the data generated by the subsequent processing steps. This will be the standard library produced by the subprogram.

Counter i is again initialized to 1 in step 315 and the peak spectrum for the peak indexed by 1 is transferred from each sample library to the standard library in step 316. An average spectrum is calculated from the individual peak spectra and also stored in the standard library in step 317.

Individual peak data for the current peak from each of the sample libraries are transferred to the standard library in step 318. This is followed by peak data averaging in each category, which data are stored in step 319.

In step 320 all appropriate spectral matches $M_a$ are calculated from the individual and average spectra and transferred to the standard library in step 321.

The counter is then incremented in step 322 and tested against the total number of peaks P. If i exceeds P, the program is terminated. Otherwise, the next peak is processed by returning to step 316.

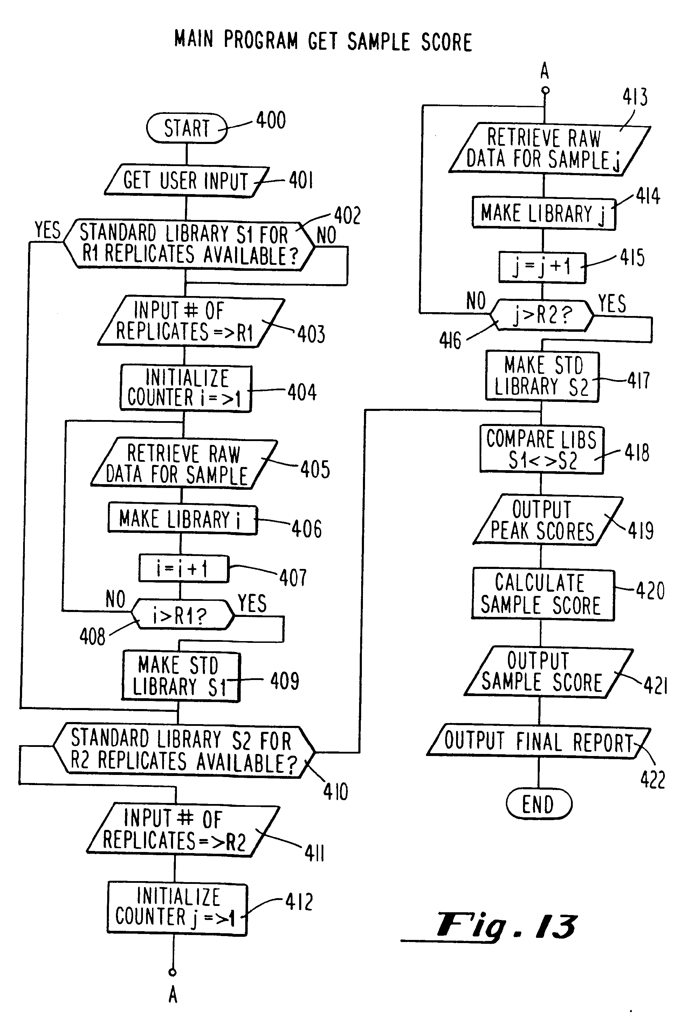

The Get-Sample-Score program (Figure 13) incorporates the previously described subprograms to arrive at an overall sample score indicative of the similarity between any two samples analyzed by the same or different chromatographic conditions on the same or different instruments. The overall procedure that results in the sample score will also identify those peaks in the two samples that can be considered to be derived from the same chemical compound present in the two samples.

The overall procedure assumes that raw data for the number of replicates $R_1$ and $R_2$ defined for the first and second sample, respectively, are available. This does not preclude the possibility that these data are generated concurrently with execution to Get-Sample-Score. Such concurrent generation would enable completely unattended operation of the overall sample scoring procedure.

In step 401 user input specific to the overall matching procedure is requested. Such input includes such items as file names, match criteria for Compare-Libs, criteria for correlation of sample libraries by Make-Std-Library, and the weighting factors used for the calculation of sample score.

In step 402 a standard library (S1) characteristic of the first sample and containing data for $R_1$ replicates can be provided. If one is available, program execution is transferred to step 410. Otherwise, a standard library is generated in steps 403 through 409.

In step 403 input is requested concerning the number of replicates for the first sample and assigned

to the variable $R_1$. Next, a counter is initialized to 1 in step 404 and the raw data for the replicate analysis of the first sample as indexed by the counter is retrieved in step 405. Subroutine Make-Library is invoked in step 406 to produce a sample library for the current replicate. The counter is incremented in step 407 and if more replicates are to be processed as tested in step 408 the program returns to step 405. Otherwise, subprogram Make-Std-Library is called next in step 409 to generate a standard library S1 from the individual sample libraries.

In step 410 a standard library (S2) characteristic of the second sample and containing data for $R_2$ replicates can be provided. If such a standard is available, program execution is transferred to step 418. Otherwise, a standard library is generated in steps 411 through 417.

In step 411 input is requested concerning the number of replicates for the second sample and assigned to variable $R_2$. Next, a counter is initialized to 1 in step 412 and the raw data for the replicate analysis of the second sample as indexed by the counter is retrieved in step 413. The subroutine Make-Library is invoked in step 414 to produce a sample library for the current replicate. The counter is incremented in step 415 and if more replicates are to be processed as tested in step 416, the program returns to step 413. Otherwise, subprogram Make-Std-Library is called next in step 417 to generate a standard library S2 from the individual sample libraries.

In step 418 subprogram Compare-Libs is used to match standard libraries S1 and S2, resulting in output in step 419 of peak assignment and peak scores for each peak in the first sample. From the individual peak scores the overall sample score can be calculated based on equation (11) in step 420. Step 421 provides for output of the sample score to an appropriate device and in step 422 a final report is generated which could incorporate information on reproducibility and confidence intervals previously obtained for sample scores from the two samples in question to make a decision as to whether or not the two samples are identical. At this point program execution is complete.

## Claims

1. A method for distinguishing a first chemical compound from a second chemical compound on the basis of chromatographic data wherein said chemical compounds absorb ultraviolet radiation, comprising the steps of:

exposing at least one of the chemical compounds one or more times to one or more selected wavelengths of ultraviolet radiation;

recording the respective absorbances of at least one of the chemical compounds upon each exposure to said ultraviolet radiation;

providing a first data set to processing means, said first data set comprising the respective absorbances for the first and second chemical compounds upon one or more exposures to one or more selected wavelengths of ultraviolet radiation; and

providing at least one spectral match factor by applying, via the processing means, a spectral matching function to the first data set;

characterized in that the method further comprises the steps of:

deriving at least one match discriminator ($MT_{dis}$) from at least one of the above-mentioned spectral match factors;

providing at least one peak score by applying, via the processing means, a peak scoring function to the first data set, wherein providing at least one peak score comprises the steps of:

providing to the processing means weighting factors ($f_m$, $f_r$, $f_a$) for the match discriminators, retention time deviations ($RT_{dev}$), and area and height deviations ($AH_{dev}$), respectively, wherein the weighting factor ($f_m$) for the match discriminators is greater than the weighting factor ($f_r$) for the retention time deviations and the weighting factor ($f_a$) for the area and height deviations; and

applying the peak scoring function to the match discriminators, the retention time deviations, and the area and height deviations according to:

$$PS = ((f_m\ MT_{dis}) + (f_r\ RT_{dev}) + (f_a\ AH_{dev}))\ /NF$$

where PS is peak score, $f_m$ is a weighting factor for the match discriminator, $f_r$ is a weighting factor for the retention time deviation, and $f_a$ is a weighting factor for the area and height deviation, and NF is an empirically derived normalization factor;

distinguishing the first chemical compound from the second chemical compound on the basis of the peak score (PS).

2. The method of claim 1 characterized in that the match discriminators ($MT_{dis}$) are derived according to:

$$MT_{dis} = D/T(DF,prob)$$

where $MT_{dis}$ is the match discriminator, D is the difference for the mean match factor derived from automatching and crossmatching functions, DF is the degrees of freedom which are calculated from the number of individual spectra for the first and second chemical compounds, and T(DF,prob) is the t-value required for a desired degree of probability (prob, in %) that two means differing by that t-value are different given the degrees of freedom applicable.

3. The method of claim 1 or 2 characterized in that the spectral matching function is applied to the first data set according to:

$$MF_g = 1000\ (1 - r^2)$$

where $MF_g$ is a general match factor and r is a correlation coefficient which relates the absorbances for the first chemical compound at selected wavelengths to the absorbances for the second chemical compound at the same wavelengths.

4. The method of claim 1 or 2 characterized in that the spectral matching function is applied to the first data set and to the average absorbances according to:

$$MF_a = 1000\ (1 - r^2)$$

where $MF_a$ is an automatch factor and r is a correlation coefficient which relates the individual absorbances of a chemical compound at selected wavelengths to the average absorbances for the same chemical compound at the same wavelengths.

5. The method of claim 1 or 2 characterized in that the spectral matching function is applied to the first data set and to the average absorbances according to:

$$MF_x = 1000\ (1 - r^2)$$

wherein $MF_x$ is a crossmatch factor and r is a correlation coefficient which relates the individual absorbances for one of the chemical compounds at selected wavelengths to the average absorbances for the other chemical compound at the same wavelengths.

6. The method of one of the claims 3 to 5 characterized in that r is applied according to:

$$r = \frac{[(\Sigma xy) - (\Sigma x)(\Sigma y)/n_f]}{[\{\Sigma x^2 - (\Sigma x)^2/n_f\}\{\Sigma y^2 - (\Sigma y)^2/n_f\}]^{1/2}}$$

where x and y, respectively, are the absorbances of the first and second chemical compounds at the same wavelength, or where x and y, respectively, are individual and averaged absorbances for the same chemical compound at the same wavelength or where x and y, respectively, are the individual absorbances for one chemical compound and averaged absorbances for the other chemical compound at the same wavelength, and where $\Sigma$ is the summation function, and $n_f$ is the number of selected wavelength.

7. The method as claimed in one of the claims 1 to 6 characterized by the step of preparing the first data set after providing said data set to the processing means, wherein the step of preparing the first data set comprises the step of:

selecting a portion of the data set; and

calibrating the selected portion.

8. The method as claimed in one of the claims 1 to 7 characterized in that the step of providing said at least one match discriminator ($MT_{dis}$) comprises the step of applying, via the processing means, a match discrimination function to general match factors.

9. The method as claimed in one of the claims 1 to 8, characterized in that the step of providing said at least one retention time deviation ($RT_{dev}$) comprises the step of applying, via the processing means, a retention time deviation function to the retention times according to:

$$RT_{dev} = \left| RT_1 - RT_2 \right| / RT_{lim}$$

wherein $RT_{dev}$ is retention time deviation, $RT_1$ is the average of retention times for the first chemical compound, $RT_2$ is the average of retention times for the second chemical compound, and $RT_{lim}$ is a limit of variability for retention times.

10. The method as claimed in one of the claims 1 to 9 characterized by the steps of:

providing at least one peak area deviation ($AR_{dev}$) by applying, via the processing means, a peak area deviation function to the peak areas; and

further distinguishing the first chemical compound from the second chemical compound on the basis of at least one peak area deviation; wherein the peak area deviation function is applied to the peak areas according to:

$$AR_{dev} = \left| AR_1 - AR_2 \right| / AR_{lim}$$

wherein $AR_{dev}$ is peak area deviation, $AR_1$ is the average of peak areas for the first chemical compound, $AR_2$ is the average of peak areas for the second chemical compound, and $AR_{lim}$ is a limit of variability for peak area.

11. The method as claimed in one of the claims 1 to 10 characterized by the steps of:

providing at least one peak height deviation ($HT_{dev}$) by applying, via the processing means, a peak height deviation function to the peak heights; and

further distinguishing the first chemical compound from the second chemical compound on the basis of at least one peak height deviation; wherein the peak height deviation function is applied to the peak heights according to:

$$HT_{dev} = \left| HT_1 - HT_2 \right| / HT_{lim}$$

where $HT_{dev}$ is peak height deviation, $HT_1$ is the average peak heights for the first chemical compound, $HT_2$ is the average peak heights for the second chemical compound, and $HT_{lim}$ is a limit of variability for peak height.

12. The method as claimed in one of the claims 1 to 11 characterized in that the step of providing at least one area and height deviation ($AH_{dev}$) comprises the step of applying, via the processing means, an area and height deviation function to the peak area deviations and the peak height deviations according to:

$$AH_{dev} = (AR_{dev} + HT_{dev})/2$$

wherein $AH_{dev}$ is area and height deviation, $AR_{dev}$ is peak area deviation, and $HT_{dev}$ is peak height deviation.

**Patentansprüche**

1. Ein Verfahren zum Unterscheiden einer ersten chemischen Verbindung von einer zweiten chemischen Verbindung auf der Basis von chromatographischen Daten, bei dem die chemischen Komponenten ultraviolette Strahlung absorbieren, welches folgende Schritte einschließt:

ein- oder mehrmaliges Aussetzen von mindestens einer der chemischen Verbindungen einer oder mehreren ausgewählten Wellenlängen von ultravioletter Strahlung;

Aufzeichnen der jeweiligen Absorptionsvermögen von mindestens einer der chemischen Komponenten, jedesmal wenn sie der ultravioletten Strahlung ausgesetzt ist;

Liefern eines ersten Datensatzes zu einer Verarbeitungseinrichtung, wobei der erste Datensatz die jeweiligen Absorptionsvermögen für die erste und die zweite chemische Komponente, die ein- oder mehrmals einer oder mehreren ausgewählten Wellenlängen von ultravioletter Strahlung ausgesetzt waren, aufweist; und

Schaffen mindestens eines spektralen Anpassungsfaktors durch Anwenden, über die Verarbeitungseinrichtung, einer spektralen Anpassungsfunktion auf den ersten Datensatz;

dadurch gekennzeichnet, daß das Verfahren ferner folgende Schritte aufweist:

Ableiten mindestens eines Unterscheidungswerts ($MT_{dis}$) aus mindestens einem der oben genannten spektralen Anpassungsfaktoren;

Schaffen von mindestens einer Spitzenwertung durch Anwenden, über die Verarbeitungseinrichtung, einer Spitzenwertungsfunktion auf einen ersten Datensatz, wobei mindestens eine Spitzenwertung geschaffen wird, wobei es folgende Schritte einschließt:

Liefern von Gewichtungsfaktoren ($f_m$, $f_r$, $f_a$) für die Anpassungsunterscheidungswerte, Retentionszeitabweichungen ($RT_{dev}$) und Flächen- bzw. Höhen-Abweichungen ($AH_{dev}$) zu der Verarbeitungseinrichtung, wobei der Gewichtungsfaktor ($f_m$) für die Anpassungsunterscheidungswerte größer ist, als der Gewichtungsfaktor ($f_r$) für die Retentionszeitabweichungen und der Gewichtungsfaktor ($f_a$) für die Flächen- und Höhen-Abweichungen; und
Anwenden der Spitzenwertungsfunktion auf die Anpassungsunterscheidungswerte, die Retentionszeitabweichungen und die Flächen- und Höhen-Abweichungen gemäß folgender Gleichung:

$$PS = ((f_m\, MT_{dis}) + (f_r\, RT_{dev}) + (f_a\, AH_{dev}))\, /NF$$

bei der PS die Spitzenwertung ist, $f_m$ ein Gewichtungsfaktor für den Anpassungsunterscheidungswert ist, $f_r$ ein Gewichtungsfaktor für die Retentionszeitabweichung ist, $f_a$ ein Gewichtungsfaktor für die Flächen- und Höhen-Abweichung ist, und NF ein empirisch abgeleiteter Normierungsfaktor ist;
wobei die erste chemische Verbindung von der zweiten chemischen Verbindung auf der Basis der Spitzenwertung (PS) unterschieden wird.

2. Das Verfahren nach Anspruch 1, dadurch gekennzeichnet, daß die Anpassungsunterscheidungswerte ($MT_{dis}$) gemäß folgender Gleichung abgeleitet werden:

$$MT_{dis} = D/T(DF,prob)$$

bei der $MT_{dis}$ der Anpassungsunterscheidungswert ist, D der Unterschied für den mittleren Anpassungsfaktor, der von den automatischen Anpassungs- und den Überkreuzan-passungs-Funktionen abgeleitet ist, ist, DF die Freiheitsgrade sind, die aus der Anzahl der einzelnen Spektren für die erste und die zweite chemische Verbindung berechnet sind, und T (DF,prob) der t-Wert ist, der für einen gewünschten Wahrscheinlichkeitsgrad (prob, in Prozent), daß zwei Mittelwerte, die sich um diesen t-Wert unterscheiden, verschieden sind, vorausgesetzt die Freiheitsgrade sind anwendbar, erforderlich ist.

3. Verfahren nach Anspruch 1 oder 2, dadurch gekennzeich net, daß die spektrale Anpassungsfunktion gemäß folgender Gleichung auf den ersten Datensatz angewendet wird:

$$MF_g = 1000 (1 - r^2)$$

bei der $MF_g$ ein allgemeiner Anpassungsfaktor ist und r ein Korrelationskoeffizient ist, der die Aufnahmefähigkeiten für die erste chemische Verbindung bei ausgewählten Wellenlängen mit den Absorptionsvermögen der zweiten chemischen Verbindung bei den gleichen Wellenlängen in Beziehung setzt.

4. Verfahren nach Anspruch 1 oder 2, dadurch gekennzeichnet, daß die spektrale Anpassungsfunktion gemäß folgender Gleichung auf den ersten Datensatz und auf das gemittelte Absorptionsvermögen angewendet wird:

$$MF_a = 1000(1 - r^2)$$

bei der $MF_a$ ein automatischer Anpassungsfaktor ist und r ein Korrelationskoeffizient ist, der die einzelnen Absorptionsvermögen einer chemischen Verbindung bei ausgewählten Wellenlängen mit den gemittelten Absorptionsvermögen für die gleiche chemische Verbindung bei den gleichen Wellenlängen in Beziehung setzt.

5. Verfahren nach Anspruch 1 oder 2, dadurch gekennzeichnet, daß die spektrale Anpassungsfunktion gemäß folgender Gleichung auf den ersten Datensatz und auf die gemittelten Absorptionsvermögen angewendet wird:

$$MF_x = 1000(1 - r^2)$$

bei der $MF_x$ ein Überkreuzanpassungsfaktor ist und r ein Korrelationskoeffizient ist, der die einzelnen Absorptionsvermögen einer der chemischen Verbindungen bei ausgewählten Wellenlängen mit den gemittelten Absorptionsvermögen der anderen chemischen Verbindungen bei den gleichen Wellenlängen in Beziehung setzt.

6. Das Verfahren nach einem der Ansprüche 3 bis 5, dadurch gekennzeichnet, daß r gemäß folgender Gleichung verwendet wird:

$$r = \frac{[(\Sigma xy) - (\Sigma x)(\Sigma y)/n_f]}{[\{\Sigma x^2 - (\Sigma x)^2/n_f\} \{\Sigma y^2 - (\Sigma y)^2/n_f\}]^{1/2}}$$

bei der x bzw. y die Absorptionsvermögen der ersten und der zweiten chemischen Komponenten bei der gleichen Wellenlänge sind, oder bei der x bzw. y einzelne und gemittelte Absorptionsvermögen für die gleiche chemische Komponente bei der gleichen Wellenlänge sind, oder bei der x bzw. y die einzelnen Absorptionsvermögen für eine chemische Komponente und die gemittelten Absorptionsvermögen für die andere chemische Komponente bei der gleichen Wellenlänge sind, bei der $\Sigma$ die Summationsfunktion ist, und bei der $f_f$ die Anzahl der ausgewählten Wellenlängen ist.

7. Das Verfahren nach einem der Ansprüche 1 bis 6, gekennzeichnet durch den Schritt des Vorbearbeitens des ersten Datensatzes nach dem Liefern des Datensatzes zu der Verabeitungseinrichtung, bei dem der Schritt des Vorbearbeitens des ersten Datensatzes folgende Schritte einschließt:
Auswählen eines Abschnitts des Datensatzes; und
Kalibrieren des ausgewählten Abschnittes.

8. Das Verfahren nach einem der Ansprüche 1 bis 7, dadurch gekennzeichnet, daß der Schritt des Schaffens von mindestens einem Anpassungsunterscheidungswert ($MT_{dis}$) den Schritt des Anwendens, über die Verarbeitungseinrichtung, einer Anpassungsunterscheidungswert-Funktion auf die allgemeinen Anpassungsfaktoren einschließt.

9. Das Verfahren nach einem der Ansprüche 1 bis 8, dadurch gekennzeichnet, daß der Schritt des Schaffens der mindestens einen Retentionszeitabweichung (RT$_{dev}$) den Schritt des Anwendens, über die Verarbeitungseinrichtung, einer Retentionszeitabweichungsfunktion auf die Retentionszeiten gemäß folgender Gleichung einschließt:

$$RT_{dev} = |RT_1 - RT_2|/RT_{lim}$$

bei der RT$_{dev}$ die Retentionszeitabweichung ist, RT$_1$ die Mittelung der Retentionszeiten für die erste chemische Verbindung ist, RT$_2$ die Mittelung der Retentionszeiten für die zweite chemische Verbindung ist, und RT$_{lim}$ eine Grenze für die Veränderlichkeit der Retentionszeiten ist.

10. Das Verfahren nach einem der Ansprüche 1 bis 9, gekennzeichnet durch folgende Schritte: Schaffen mindestens einer Spitzenflächenabweichung (AR$_{dev}$) durch Anwenden, über die Verarbeitungseinrichtung, einer Spitzenflächenabweichungsfunktion auf die Spitzenflächen; und ferner Unterscheiden der ersten chemischen Komponente von der zweiten chemischen Komponente auf der Basis von mindestens einer Spitzenflächenabweichung; bei dem die Spitzenflächenabweichungsfunktion gemäß folgender Gleichung auf die Spitzenflächen angewendet wird:

$$AR_{dev} = |AR_1 - AR_2|/AR_{lim}$$

bei der AR$_{dev}$ die Spitzenflächenabweichung ist, AR$_1$ die Mittelung der Spitzenflächen für die erste chemische Verbindung ist, AR$_2$ die Mittelung der Spitzenflächen für die zweite chemische Verbindung ist, und AR$_{lim}$ eine Grenze für die Veränderlichkeit der Spitzenfläche ist.

11. Das Verfahren nach einem der Ansprüche 1 bis 10, gekennzeichnet durch folgende Schritte: Schaffen von mindestens einer Spitzenhöhenabweichung (HT$_{dev}$) durch Verwenden, über die Verarbeitungseinrichtung, einer Spitzenhöhenabweichungsfunktion auf die Spitzenhöhen; und ferner Unterscheiden der ersten chemischen Komponente von der zweiten chemischen Komponente auf der Basis von mindestens einer Spitzenhöhenabweichung; bei der die Spitzenhöhenabweichungsfunktion gemäß folgender Gleichung auf die Spitzenhöhen angewendet wird:

$$HT_{dev} = |HT_1 - HT_2|/HT_{lim}$$

bei der HT$_{dev}$ die Spitzenhöhenabweichung ist, HT$_1$ der Mittelwert der Spitzenhöhen für die erste chemische Komponente, HT$_2$ der Mittelwert der Spitzenhöhen für die zweite chemische Verbindung, und HT$_{lim}$ eine Grenze für die Veränderlichkeit der Spitzenhöhe ist.

12. Das Verfahren nach einem der Ansprüche 1 bis 11, dadurch gekennzeichnet, daß der Schritt des Schaffens von mindestens einer Flächen- und Höhen-Abweichung (AH$_{dev}$) den Schritt des Anwendens, über die Verarbeitungseinrichtung, einer Flächen- und Höhen-Abweichungs-Funktion auf die Spitzenflächenabweichungen und die Spitzenhöhenabweichungen gemäß folgender Gleichung einschließt:

$$AH_{dev} = (AR_{dev} + HT_{dev})/2$$

bei der AH$_{dev}$ die Flächen- und -Höhen-Abweichung ist, AR$_{dev}$ die Spitzenflächenabweichung, und HT$_{dev}$ die Spitzenhöhenabweichung ist.

## Revendications

1. Procédé pour distinguer un premier composé chimique d'un second composé chimique sur la base de données de chromatographie, lesdits composés chimiques absorbant une radiation ultraviolette, comprenant les étapes consistant à:

exposer au moins l'un des composés chimiques une ou plusieurs fois à une ou plusieurs longueurs d'onde sélectionnées de radiation ultraviolette;

enregistrer les absorbances respectives d'au moins un des composés chimiques lors de chaque exposition à ladite radiation ultraviolette;

fournir un premier ensemble de données à des moyens de traitement, ledit premier ensemble de données comprenant les absorbances respectives pour les premier et second composés chimiques lors d'une ou plusieurs expositions à une ou plusieurs longueurs d'onde sélectionnées de radiation ultraviolette; et

fournir au moins un facteur de coïncidence spectrale en appliquant, via les moyens de traitement, une fonction de coïncidence spectrale au premier ensemble de données;

caractérisé, en ce qu'il comprend également les étapes consistant à:

déduire au moins un discriminateur de coïncidence (MT$_{dis}$) à partir d'au moins un des facteurs de coïncidence spectrale mentionnés ci-dessus;

fournir au moins un résultat maximum en appliquant, via les moyens de traitement, une fonction de résultat maximum au premier ensemble de données, la fourniture d'au moins un résultat maximum comprenant les étapes consistant à:

fournir aux moyens de traitement des facteurs de poids (f$_m$, f$_r$, f$_a$) pour les discriminateurs de coïncidence, des écarts de temps de rétention (RT$_{dev}$), et des écarts de surface et de hauteur (AH$_{dev}$), respectivement, le facteur de poids (f$_m$) pour les discriminateurs de coïncidence étant supérieur au facteur de poids (f$_r$) pour les écarts de temps de rétention et au facteur de

poids ($f_a$) pour les écarts de surface et de hauteur; et

      appliquer la fonction de résultat maximum aux discriminateurs de coïncidence, aux écarts de temps de rétention, et aux écarts de surface et de hauteur, conformément à l'égalité:

$$PS = ((f_m \, MT_{dis}) + (f_r \, RT_{dev}) + (f_a \, AH_{dev})) / NF$$

où PS est le résultat maximum, $f_m$ est un facteur de poids pour le discriminateur de coïncidence, $f_r$ est un facteur de poids pour l'écart de temps de rétention, et $f_a$ est un facteur de poids pour l'écart de surface et de hauteur, et NF est un facteur de normalisation déduit de façon empirique;

      distinguer le premier composé chimique du second composé chimique sur la base du résultat maximum (PS).

2.   Procédé selon la revendication 1, caractérisé en ce que les discriminateurs de coïncidence ($MT_{dis}$) sont déduits conformément à l'égalité:

$$MT_{dis} = D/T \, (DF, prob)$$

où $MT_{dis}$ est le discriminateur de coïncidence, D est la différence pour le facteur de coïncidence moyen qui est déduit à partir de fonctions d'autocoïncidence et de coïncidence croisée, DF représente les degrés de liberté qui sont calculés à partir du nombre de spectres individuels pour les premier et second composés chimiques, et T (DF, prob) est la valeur t requise pour un degré de probabilité souhaité (prod, en %) pour que deux moyennes qui diffèrent de la valeur t soient différentes étant donné les degrés de liberté applicables.

3.   Procédé selon la revendication 1 ou 2, caractérisé en ce que la fonction de coïncidence spectrale est appliquée au premier ensemble de données conformément à l'égalité:

$$MF_g = 1000 \, (1 - r^2)$$

où $MF_g$ est un facteur de coïncidence globale et r est un coefficient de corrélation qui concerne les absorbances pour le premier composé chimique à des longueurs d'onde sélectionnées relativement aux absorbances pour le second composé chimique aux mêmes longueurs d'onde.

4.   Procédé selon la revendication 1 ou 2, caractérisé en ce que la fonction de coïncidence spectrale est appliquée au premier ensemble de données et aux absorbances moyennes conformément à l'égalité:

$$MF_A = 1000 \, (1 - r^2)$$

où $MF_A$ est un facteur d'autocoïncidence et r est un coefficient de corrélation qui concerne les absorbances individuelles d'un composé chimique à des longueurs d'onde sélectionnées relativement aux absorbances moyennes pour le même composé chimique aux mêmes longueurs d'onde.

5.   Procédé selon la revendication 1 ou 2, caractérisé en ce que la fonction de coïncidence spectrale est appliquée aux premier ensemble de données et aux absorbances moyennes conformément à l'égalité:

$$MF_x = 1000 \, (1 - r^2)$$

où $MF_x$ est un facteur d'autocoïncidence et r est un coefficient de corrélation qui concerne les absorbances individuelles pour un des composés chimiques à des longueurs d'onde sélectionnées relativement aux absorbances moyennes pour l'autre composé chimique aux mêmes longueurs d'onde.

6.   Procédé selon l'une quelconque des revendications 3 à 5, caractérisé en ce que r est appliqué conformément à l'égalité:

$$r = [(\Sigma xy) - (\Sigma x)(\Sigma y)/n_f]/[(\Sigma x^2 - (\Sigma x)^2/n_f)(\Sigma y^2 - (\Sigma y)^2/n_f)]^{1/2}$$

où x et y, respectivement, sont les absorbances des premier et second composés chimiques à la même longueur d'onde, ou, où x et y, respectivement, sont des absorbances individuelles et moyennées pour le même composé chimique à la même longueur d'onde, ou, où x et y, respectivement, sont les absorbances individuelles pour un composé chimique et des absorbances moyennées pour l'autre composé chimique à la même longueur d'onde, et où $\Sigma$ est la fonction de somme, et $n_f$ est le nombre de longueurs d'onde sélectionnées.

7.   Procédé selon l'une quelconque des revendications 1 à 6, caractérisé par l'étape qui consiste à préparer le premier ensemble de données après avoir fourni ledit ensemble de données aux moyens de traitement, dans lequel l'étape consistant à préparer le premier ensemble de données comprend l'étape consistant à:

      sélectionner une partie de l'ensemble de données; et

      étalonner la partie sélectionnée.

8.   Procédé selon l'une quelconque des revendication 1 à 7, caractérisé en ce que l'étape qui consiste à fournir au moins l'un desdits discriminateurs de coïncidence ($MT_{dis}$) comprend l'étape consistant à appliquer, via les moyens de traitement, une fonction de discrimination de coïncidence aux facteurs de coïncidence globale.

9.   Procédé selon l'une quelconque des revendications 1 à 8, caractérisé en ce que l'étape qui consiste à fournir au moins l'un desdits écarts de temps de rétention ($RT_{dev}$) comprend l'étape consistant à appliquer aux temps de rétention, via les moyens de traitement, une fonction d'écart de temps de rétention conforme à l'égalité:

$$RT_{dev} = |RT1 - RT2|/RT_{lim}$$

où $RT_{dev}$ est un écart de temps de rétention, $RT_1$ représente les temps de rétention moyens pour le premier composant chimique, $RT_2$ et la moyenne des temps de rétention pour le second composé chimique, et $RT_{lim}$ est une limite de variabilité pour les temps de rétention.

10. Procédé selon l'une quelconque des revendications 1 à 9, caractérisé par les étapes consistant à:

    fournir au moins un écart de surface maximum ($AR_{dev}$) en appliquant, via les moyens de traitement, une fonction d'écart de surface maximum aux surfaces maxima; et

    distinguer également le premier composé chimique du second composé chimique sur la base d'au moins une écart de surface maximum;

    dans lequel la fonction d'écart de surface maximum est appliquée aux surfaces maxima conformément à l'égalité:

$$AR_{dev} = |AR_1 - AR_2|/AR_{lim}$$

où $AR_{dev}$ est l'écart de surface maximum, $AR_1$ est la moyenne des surfaces maxima pour le premier composé chimique, $AR_2$ est la moyenne des surfaces maxima pour le second composé chimique, et $AR_{lim}$ est une limite de variabilité pour la surface maximum.

11. Procédé selon l'une quelconque des revendications 1 à 10, caractérisé par les étapes consistant à:

    fournir au moins une écart de hauteur maximum ($AR_{dev}$) en appliquant, via les moyens de traitement, une fonction d'écart de hauteur maximum aux hauteurs maxima; et

    distinguer également le premier composé chimique du second composé chimique sur la base d'au moins une écart de hauteur maximum;

    dans lequel la fonction d'écart de hauteur maximum est appliquée aux hauteurs maxima conformément à l'égalité:

$$HT_{dev} = |HT_1 - HT_2|/HT_{lim}$$

où $HT_{dev}$ est l'écart de hauteur maximum, $HT_1$ est la moyenne des hauteurs maxima pour le premier composé chimique, $HT_2$ est la moyenne des hauteurs maxima pour le second composé chimique, et $HT_{lim}$ est une limite de variabilité pour la hauteur maximum.

12. Procédé selon l'une quelconque des revendications 1 à 11, caractérisé en ce que l'étape qui consiste à fournir au moins un écart de surface et de hauteur ($AH_{dev}$) comprend l'étape consistant à appliquer, via les moyens de traitement, une fonction d'écart de surface et de hauteur aux écarts de surface maximum et aux écarts de hauteur maximum, conformément à l'égalité:

$$AH_{dev} = (AR_{dev} + HT_{dev})/2$$

où $AH_{dev}$ est un écart de surface et de hauteur, $AR_{dev}$ est écart de surface maximum, et $HT_{dev}$ est un écart de hauteur maximum.

SPLINED SPECTRUM

Fig. 1a

SPLINED SPECTRUM

Fig. 1b

*Fig. 1c*

Fig. 2

T12 (LEDGSPR)
T13 (TGQIFK)

### Fig. 3a

MATCH = 997.29

### Fig. 3b

*Fig. 3c*

25

T14 (ETYSK)
T13 (TGQIFK)

_**Fig. 4a**_

MATCH = 918.68

_**Fig. 4b**_

*Fig. 4c*

Fig. 5a

Fig. 5b

Fig.6

| | GRADIENT I (TFA)[A] | | | GRADIENT II (PHOSPHATE)[B] | | |
|---|---|---|---|---|---|---|
| | MEAN[C] | LOW[D] | HIGH[E] | MEAN[C] | LOW[D] | HIGH[E] |
| **RETENTION TIME** | | | | | | |
| STANDARD | | | | | | |
| STANDARD DEVIATION (MIN) | 0.027 | 0.007 | 0.174 | 0.021 | 0.004 | 0.041 |
| RELATIVE STANDARD DEVIATION (%) | 0.136 | 0.008 | 1.882 | 0.075 | 0.007 | 0.596 |
| **PEAK AREA**[S] | | | | | | |
| STANDARD DEVIATION | 0.568 | 0.006 | 3.498 | 0.403 | 0.006 | 2.847 |
| RELATIVE STANDARD DEVIATION (%) | 6.265 | 0.006 | 33.508 | 4.004 | 0.006 | 40.485 |
| **PEAK HEIGHT**[S] | | | | | | |
| STANDARD DEVIATION | 0.501 | 0.006 | 5.476 | 0.464 | 0.000 | 2.682 |
| RELATIVE STANDARD DEVIATION (%) | 3.281 | 0.006 | 16.425 | 3.109 | 0.000 | 41.555 |
| **MATCH FACTOR** | | | | | | |
| STANDARD DEVIATION | 0.156 | 0.000 | 1.306 | 0.080 | 0.000 | 0.661 |
| RELATIVE STANDARD DEVIATION (%) | 0.016 | 0.000 | 0.131 | 0.008 | 0.000 | 0.066 |

[A] STANDARD DEVIATIONS ARE BASED ON A CALIBRATION LIBRARY OF 40 PEAKS
[B] STANDARD DEVIATIONS ARE BASED ON A CALIBRATION LIBRARY OF 31 PEAKS
[C] OVERALL MEAN FOR ALL PEAKS IN THE CALIBRATION LIBRARY OF STANDARD DEVIATIONS CALCULATED FOR EACH INDIVIDUAL PEAK FROM FOUR REPLICATE INJECTIONS OF R-HGH.
[D] MINIMUM VALUE FOR THE STANDARD OF RELATIVE STANDARD DEVIATIONS AS DEFINED IN C.
[E] MAXIMUM VALUE FOR THE STANDARD OR RELATIVE STANDARD DEVIATIONS AS DEFINED IN C.
[S] PEAK AREA AND PEAK HEIGHT COUNTS WERE NORMALIZED TO FRAGMENT T10 AS 100

## *Fig. 7*

EP 0 437 829 B1

**(A)**

| SAMPLE | AMOUNT (μg) | INDIVIDUAL SAMPLE SCORES | | | | AVERAGE SAMPLE SCORE |
|---|---|---|---|---|---|---|
| | | A | B | C | D | |
| 1 | 100 | 0.076 | 0.025 | 0.048 | 0.052 | 0.050 |
| 2 | 50 | 0.882 | 0.793 | 0.719 | - | 0.798 |
| 3 | 200 | 0.341 | 0.499 | 0.553 | 0.379 | 0.443 |

**(B)**

| SAMPLE | AMOUNT (MG) | INDIVIDUAL SAMPLES SCORES | | | | AVERAGE SAMPLE SCORE |
|---|---|---|---|---|---|---|
| | | A | B | C | D | |
| 1 | 100 | 0.025 | 0.016 | 0.037 | 0.064 | 0.036 |
| 2 | 100 | 0.671 | - | - | - | 0.671 |
| 3 | 100 | 1.687 | 1.723 | 1.677 | 1.681 | 1.692 |

$$Fig. 8$$

EP 0 437 829 B1

Fig.9

EP 0 437 829 B1

## PROGRAM MAKE LIBRARY

```
        START              100

        USER INPUT         101

        RETRIEVE RAW       102
        DATA FILE

        SELECT SIGNAL      103

        FIND ALL PEAKS     104

        # PEAKS=>P         105

        CREATE FILE FOR    106
        SAMPLE LIBRARY

        INITIALIZE         107
        COUNTER i=>1

        FIND APEX SPECTRUM
        FOR PEAK i         108

        FIND APPROPRIATE   109
        REFERENCE SPECTRA

        DO BACKGROUND      110
        CORRECTION
        =>PEAK SPECTRUM

        CALIBRATE WAVE-    111
        LENGTH AXIS

        A
```

```
        A

        SMOOTH
        DERIVATIVE         112
        SPLINE
        TRANSFORM

        TRANSFER SPECTRUM  113
        TO LIBRARY FILE

        TRANSFER PEAK DATA
        TO LIBRARY FILE    114

        i = i + 1          115

   NO                YES
        i > P ?
                          116

        END
```

## _Fig . 10_

## SUBPROGRAM COMPARE LIBS

START — 200

GET USER INPUT — 201

RETRIEVE LIBRARY L1 — 202

DETERMINE # OF PEAKS =>P1 — 203

RETRIEVE LIBRARY L2 — 204

DETERMINE # OF PEAKS =>P2 — 205

CORRECT RETENTION TIMES — 206

NORMALIZE AREA AND HEIGHT — 207

INITIALIZE COUNTERS i = >1, k =>0 — 208

RETRIEVE DATA FOR PEAK i IN L1 — 209

CALCULATE RET TIME WINDOW — 210

INITIALIZE COUNTER j =>1 — 211

RETRIEVE DATA FOR PEAK j IN L2 — 212

A

A — 213

PEAK j INSIDE RET WINDOW?  YES / NO

CALCULATE MT$_{dis.}$ CN — 214

CALCULATE DEVIATIONS — 215

k<10?  YES / NO — 216

MATCH BETTER THAN TABLE?  YES / NO — 217

REMOVE ENTRY 10 FROM TABLE — 218

k = k + 1 — 219

INSERT MATCH INTO TABLE — 220

j = j + 1 — 221

j>P2?  NO / YES — 222

i = i + 1 — 223

i>P1?  NO / YES — 224

DO PEAK ASSIGNMENT — 225

CALCULATE PEAK SCORES — 226

END

_**Fig. II**_

## SUBPROGRAM MAKE STD LIBRARY

_**Fig. 12**_

## MAIN PROGRAM GET SAMPLE SCORE

Fig. 13